(19) Europäisches Patentamt
European Patent Office
Office européen des brevets

(11) **EP 4 645 213 A1**

(12) **EUROPEAN PATENT APPLICATION**
published in accordance with Art. 153(4) EPC

(43) Date of publication:
**05.11.2025 Bulletin 2025/45**

(21) Application number: **22969657.0**

(22) Date of filing: **29.12.2022**

(51) International Patent Classification (IPC):
***G06T 7/00*** *(2017.01)*

(52) Cooperative Patent Classification (CPC):
**G06T 7/00**

(86) International application number:
**PCT/CN2022/143281**

(87) International publication number:
**WO 2024/138508 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
- **JIANG, Wenjun**
  **Shenzhen, Guangdong 518129 (CN)**
- **WANG, Deming**
  **Shenzhen, Guangdong 518129 (CN)**
- **XU, Bin**
  **Shenzhen, Guangdong 518129 (CN)**
- **LI, Ya**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **OBSTACLE DETECTION METHOD AND RELATED APPARATUS**

(57) An obstacle detection method is provided. The obstacle detection method is applied to an intelligent driving device, and includes: The intelligent driving device obtains point cloud data of a to-be-detected obstacle through a radar, and then outputs a convex hull polygon of the to-be-detected obstacle based on the point cloud data. The convex hull polygon is obtained based on a spatial distribution feature of the point cloud data projected onto a range image and a location correspondence between the range image and an occupancy grid map. This improves obstacle detection accuracy.

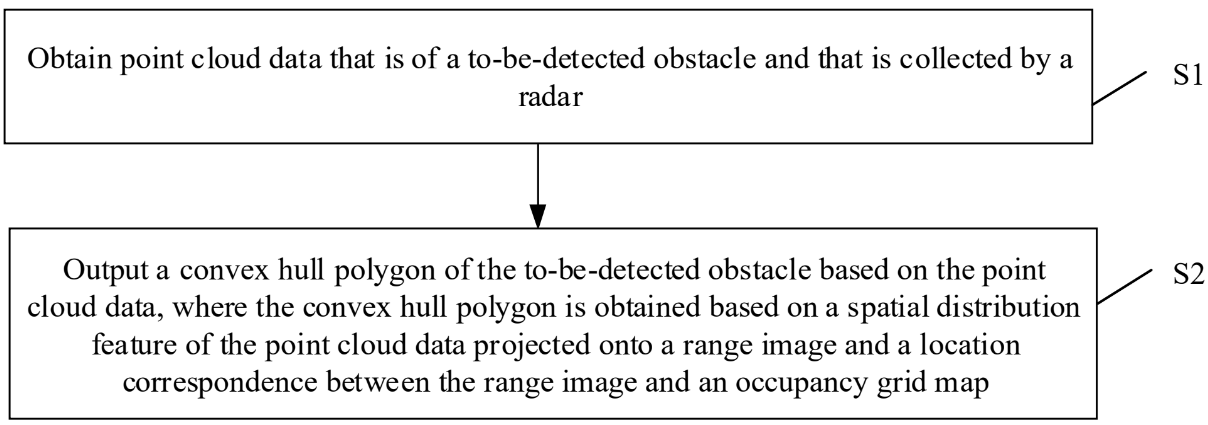


FIG. 1b

EP 4 645 213 A1

Processed by Luminess, 75001 PARIS (FR)

## Description

### TECHNICAL FIELD

This application relates to the field of intelligent driving, and in particular, to an obstacle detection method and a related apparatus.

### BACKGROUND

As one of key technologies of autonomous driving technologies, an obstacle detection technology plays an important role in determining a passable area of a vehicle, a current road condition status, and the like, and is an important factor for ensuring safe and reliable operating of an autonomous driving device.

Currently, an obstacle is generally detected by using a method such as laser detection, to control the vehicle to avoid the obstacle and travel safely. When obstacle detection is performed based on point cloud data obtained by using the laser detection method, a height difference segmentation algorithm is mainly used to perform data processing on the point cloud data, to determine point cloud data belonging to the obstacle. However, the method depends only on information such as a height difference of the point cloud data, causing low obstacle detection accuracy.

### SUMMARY

This application provides an obstacle detection method and a related apparatus, to improve obstacle detection accuracy.

According to a first aspect, this application provides an obstacle detection method, which may be applied to the field of autonomous driving technologies. The method is applied to an intelligent driving device. The method includes: The intelligent driving device obtains point cloud data of a to-be-detected obstacle through a radar, and then outputs a convex hull polygon of the to-be-detected obstacle based on the point cloud data. The convex hull polygon is obtained based on a spatial distribution feature of the point cloud data projected onto a range image and a location correspondence between the range image and an occupancy grid map.

In this application, after obtaining the point cloud data of the to-be-detected obstacle through the radar, the intelligent driving device projects the disordered point cloud data onto the range image with a clear neighborhood relationship, so that point cloud data processing efficiency can be improved. In addition, based on the spatial distribution feature of the point cloud data projected onto the range image and the location correspondence between the point cloud data on the range image and the point cloud data on the occupancy grid map, the convex hull polygon is used to indicate a shape and a location of the to-be-detected obstacle, so that obstacle detection accuracy is further improved.

In a possible implementation of the first aspect, the outputting a convex hull polygon of the to-be-detected obstacle based on the point cloud data specifically includes:

projecting the point cloud data onto the range image and the occupancy grid map separately, to obtain a location correspondence between the point cloud data on the range image and the point cloud data on the occupancy grid map;
determining, based on the location correspondence, first information that meets a first condition, where the first condition indicates the spatial distribution feature of the point cloud data projected onto the range image, and the first information indicates a corresponding spatial distribution feature, on the occupancy grid map, of the point cloud data projected onto the range image; and
generating the convex hull polygon of the to-be-detected obstacle based on the first information.

In this implementation, in comparison with current direct conversion of the point cloud data into a grid, which leads to a problem of insufficient feature extraction of the point cloud data, based on a continuous distribution feature of point cloud data of a surface of the obstacle on the range image, a feature that meets the continuous distribution feature is extracted from the range image to a corresponding occupancy grid, to improve the obstacle detection accuracy.

In a possible implementation of the first aspect, the first condition includes continuous distribution conditions, respectively in a horizontal direction and a vertical direction of the range image, of the point cloud data projected onto the range image, and the determining, from the range image based on the location correspondence, first information that meets a first condition includes:

traversing each row in the range image, and determining, based on the location correspondence, second information that meets the continuous distribution condition in the horizontal direction;
traversing each column in the range image, and determining, based on the location correspondence, third information that meets the continuous distribution condition in the vertical direction; and
generating the first information based on the second information and the third information.

In this implementation, in a first aspect, the disordered point cloud data is projected onto the range image with the clear neighborhood relationship, to complete feature extraction of the obstacle, so that the point cloud data processing efficiency can be improved. In a second aspect, a feature of the point cloud data on the range image is extracted based on the spatial distribution feature of the point cloud data projected onto the range image, so that the problem of currently insufficient feature extraction is resolved. In a third aspect, a laser beam transmitted by a lidar enables the point cloud data to generate continuity in the horizontal direction and the vertical direction on the surface of the obstacle. After the point cloud data is projected onto the range image, continuity features generated in the horizontal direction and the vertical direction on the surface of the obstacle are extracted based on the occlusion feature of the obstacle on the range image with the clear neighborhood relationship, to determine an attribute of an occupancy grid based on the continuity features, so that the obstacle is further detected, and a capability of an algorithm for detecting a general target is improved.

In a possible implementation of the first aspect, the second information includes a set of first quantities of the point cloud data continuously distributed in the horizontal direction of the range image, and the traversing each row in the range image, and determining, based on the location correspondence, second information that meets the continuous distribution condition in the horizontal direction includes:

for each pixel in each row in the range image, if there is first point cloud data projected onto the pixel, obtaining a first location of the first point cloud data on the occupancy grid map based on the location correspondence;
determining whether information about at least one piece of point cloud data is bound to the first location, to obtain a determining result, where the information includes corresponding row and column coordinates that are of the at least one piece of point cloud data and that are on the range image;
if the determining result is yes, obtaining a maximum value of the corresponding column coordinate of the at least one piece of point cloud data on the range image;
if a difference between a corresponding column coordinate of the first point cloud data on the range image and the maximum value is less than or equal to a first value, binding the information about the first point cloud data to the first location, and incrementing a value of the first quantity bound to the first location by one; and
if the determining result is no, binding the information about the first point cloud data to the first location, and setting the value of the first quantity bound to the first location to an initial value.

In this implementation, each row in the range image is traversed, the horizontal continuity feature is extracted from the range image, and the feature is bound to the grid, so that a feature extraction dimension of the corresponding obstacle in the grid is added, and the attribute of the grid is extended.

In a possible implementation of the first aspect, the third information includes a set of second quantities of the point cloud data continuously distributed in the vertical direction of the range image, and the traversing each column in the range image, and determining, based on the location correspondence, third information that meets the continuous distribution condition in the vertical direction includes:

for each pixel in each column in the range image, if there is second point cloud data projected onto the pixel, obtaining a second location of the second point cloud data on the occupancy grid map based on the location correspondence;
determining whether the information about the at least one piece of point cloud data is bound to the second location, to obtain a determining result;
if the determining result is yes, obtaining a maximum value of the corresponding row coordinate of the at least one piece of point cloud data on the range image;
if a difference between a corresponding row coordinate of the second point cloud data on the range image and the maximum value is less than or equal to a second value, binding the information about the second point cloud data to the second location, and incrementing a value of the second quantity bound to the second location by one; and
if the determining result is no, binding the information about the second point cloud data to the second location, and setting the value of the second quantity bound to the second location to an initial value.

In this implementation, each column in the range image is traversed, the vertical continuity feature is extracted from the range image, and the feature is bound to the grid, so that a feature extraction dimension of the corresponding obstacle in the grid is added, and the attribute of the grid is extended.

In a possible implementation of the first aspect, the generating the convex hull polygon of the to-be-detected obstacle based on the first information includes:

determining a status of each grid on the occupancy grid map based on the first information, to obtain a determining result; and
clustering at least one grid on the occupancy grid map based on the determining result, to obtain the convex hull polygon of the to-be-detected obstacle.

In this implementation, based on the continuous distribution feature of the point cloud data on the range image, the continuous distribution feature of the point cloud data is extracted from the range image, and the continuous distribution feature is bound to the grid. This adds the attribute of the grid, and the problem of insufficient feature extraction of the obstacle in the grid in the conventional technology is resolved. Subsequently, the continuous distribution feature is used to determine whether the grid is in an occupied state, and the convex hull polygon is output to indicate a shape and a location of the to-be-detected obstacle, so that the obstacle detection accuracy is further improved.

In a possible implementation of the first aspect, the determining a status of the occupancy grid map based on the first information, to obtain a determining result includes:

for each grid on the occupancy grid map, obtaining a value of the first quantity and a value of the second quantity that are bound to the grid, where the first quantity is a quantity of at least one piece of point cloud data that is bound to the grid and that is continuously distributed in the horizontal direction of the range image, and the second quantity is a quantity of at least one piece of point cloud data that is bound to the grid and that is continuously distributed in the vertical direction of the range image; and
if the value of the first quantity is greater than or equal to a third value, and the value of the second quantity is greater than or equal to a fourth value, determining that the grid is in an occupied state.

In this implementation, the grid is considered as being in the occupied state only when the continuous distribution feature corresponding to the grid meets a specific condition, so that the point cloud data that meets the continuous distribution feature is selected, and different types of obstacles can be detected by setting values of the third value and the fourth value with reference to an actual requirement.

In a possible implementation of the first aspect, the clustering at least one grid on the occupancy grid map based on the determining result, to obtain the convex hull polygon of the to-be-detected obstacle includes:

for each grid on the occupancy grid map, if the grid is in the occupied state, marking the grid; and
clustering all grids marked as the occupied state on the occupancy grid map, to obtain the convex hull polygon of the to-be-detected obstacle.

In this implementation, each grid on the occupancy grid map is traversed, the grid in the occupied state is marked, and the marked grids are clustered according to a connected domain algorithm, to cluster grids that are continuous in grid space into an obstacle area, and the convex hull polygon of the to-be-detected obstacle is output, so that detection of the location and the shape of the obstacle is implemented.

In a possible implementation of the first aspect, before projecting a first location set of the point cloud data onto the occupancy grid map, the method further includes:
performing division on the point cloud data in a non-uniform grid division manner, to generate the occupancy grid map.

In this implementation, in comparison with a current even grid division manner, in this implementation, non-uniform division is performed on the grids based on dynamic resolution, so that a feature of point cloud data that is distributed sparsely in a long distance can be effectively extracted. Therefore, the obstacle detection accuracy is improved.

According to a second aspect, this application provides an obstacle detection apparatus. For beneficial effects, refer to the descriptions of the first aspect. Details are not described herein again. The apparatus has a function of implementing a behavior in the method example in the first aspect. The function may be implemented by hardware, or may be implemented by hardware executing corresponding software. The hardware or the software includes one or more modules corresponding to the function. In a possible design, the apparatus is used in an intelligent driving device, and includes:

an obtaining module, configured to obtain point cloud data that is of a to-be-detected obstacle and that is collected by a radar; and
a detection module, configured to output a convex hull polygon of the to-be-detected obstacle based on the point cloud data, where the convex hull polygon is obtained based on a spatial distribution feature of the point cloud data projected onto a range image and a location correspondence between the range image and a grid map.

In this application, after obtaining, by using the obtaining module, the point cloud data that is of the to-be-detected obstacle and that is collected by the radar, the intelligent driving device projects, by using the detection module, the disordered point cloud data onto the range image with a clear neighborhood relationship, so that point cloud data processing efficiency can be improved. In addition, based on the spatial distribution feature of the point cloud data projected onto the range image and the location correspondence between the point cloud data on the range image and the point cloud data on the occupancy grid map, the convex hull polygon is used to indicate a shape and a location of the to-be-detected obstacle, so that obstacle detection accuracy is further improved.

In a possible implementation of the second aspect, the detection module is specifically configured to:

project the point cloud data onto the range image and the occupancy grid map separately, to obtain a location correspondence between the point cloud data on the range image and the point cloud data on the occupancy grid map;
determine, based on the location correspondence, first information that meets a first condition, where the first condition indicates the spatial distribution feature of the point cloud data projected onto the range image, and the first information indicates a corresponding spatial distribution feature, on the occupancy grid map, of the point cloud data projected onto the range image; and
generate the convex hull polygon of the to-be-detected obstacle based on the first information.

In a possible implementation of the second aspect, the first condition includes continuous distribution conditions, respectively in a horizontal direction and a vertical direction of the range image, of the point cloud data projected onto the range image, and determining, from the range image based on the location correspondence, the first information that meets the first condition includes:

traversing each row in the range image, and determining, based on the location correspondence, second information that meets the continuous distribution condition in the horizontal direction;
traversing each column in the range image, and determining, based on the location correspondence, third information that meets the continuous distribution condition in the vertical direction; and
generating the first information based on the second information and the third information.

In a possible implementation of the second aspect, the second information includes a set of first quantities of the point cloud data continuously distributed in the horizontal direction of the range image, and the traversing each row in the range image, and determining, based on the location correspondence, second information that meets the continuous distribution condition in the horizontal direction includes:

for each pixel in each row in the range image, if there is first point cloud data projected onto the pixel, obtaining a first location of the first point cloud data on the occupancy grid map based on the location correspondence;
determining whether information about at least one piece of point cloud data is bound to the first location, to obtain a determining result, where the information includes corresponding row and column coordinates that are of the at least one piece of point cloud data and that are on the range image;
if the determining result is yes, obtaining a maximum value of the corresponding column coordinate of the at least one piece of point cloud data on the range image;
if a difference between a corresponding column coordinate of the first point cloud data on the range image and the maximum value is less than or equal to a first value, binding the information about the first point cloud data to the first location, and incrementing a value of the first quantity bound to the first location by one; and
if the determining result is no, binding the information about the first point cloud data to the first location, and setting the value of the first quantity bound to the first location to an initial value.

In a possible implementation of the second aspect, the third information includes a set of second quantities of the point cloud data continuously distributed in the vertical direction of the range image, and the traversing each column in the range image, and determining, based on the location correspondence, third information that meets the continuous distribution condition in the vertical direction includes:

for each pixel in each column in the range image, if there is second point cloud data projected onto the pixel, obtaining a second location of the second point cloud data on the occupancy grid map based on the location correspondence;
determining whether the information about the at least one piece of point cloud data is bound to the second location, to obtain a determining result;
if the determining result is yes, obtaining a maximum value of the corresponding row coordinate of the at least one piece of point cloud data on the range image;
if a difference between a corresponding row coordinate of the second point cloud data on the range image and the maximum value is less than or equal to a second value, binding the information about the second point cloud data to the second location, and incrementing a value of the second quantity bound to the second location by one; and
if the determining result is no, binding the information about the second point cloud data to the second location, and setting the value of the second quantity bound to the second location to an initial value.

In a possible implementation of the second aspect, generating the convex hull polygon of the to-be-detected obstacle based on the first information includes:

determining a status of each grid on the occupancy grid map based on the first information, to obtain a determining result; and
clustering at least one grid on the occupancy grid map based on the determining result, to obtain the convex hull polygon of the to-be-detected obstacle.

In a possible implementation of the second aspect, the determining a status of the occupancy grid map based on the first information, to obtain a determining result includes:

for each grid on the occupancy grid map, obtaining a value of the first quantity and a value of the second quantity that are bound to the grid, where the first quantity is a quantity of at least one piece of point cloud data that is bound to the grid and that is continuously distributed in the horizontal direction of the range image, and the second quantity is a quantity of at least one piece of point cloud data that is bound to the grid and that is continuously distributed in the vertical direction of the range image; and

if the value of the first quantity is greater than or equal to a third value, and the value of the second quantity is greater than or equal to a fourth value, determining that the grid is in an occupied state.

In a possible implementation of the second aspect, the clustering at least one grid on the occupancy grid map based on the determining result, to obtain the convex hull polygon of the to-be-detected obstacle includes:

for each grid on the occupancy grid map, if the grid is in the occupied state, marking the grid; and

clustering all grids marked as the occupied state on the occupancy grid map, to obtain the convex hull polygon of the to-be-detected obstacle.

In a possible implementation of the second aspect, before projecting a first location set of the point cloud data onto the occupancy grid map, the method further includes:

performing division on the point cloud data in a non-uniform grid division manner, to generate the occupancy grid map.

In this implementation, in comparison with a current even grid division manner, in this implementation, non-uniform division is performed on the grids based on dynamic resolution, so that a feature of point cloud data that is distributed sparsely in a long distance can be effectively extracted. Therefore, the obstacle detection accuracy is improved.

According to a third aspect, this application provides an obstacle detection apparatus, including at least one memory and a processor. The memory stores code, and the processor is configured to execute the code, so that the obstacle detection apparatus performs the method according to any one of the first aspect or the possible implementations of the first aspect.

According to a fourth aspect, this application provides an intelligent driving device. The intelligent driving device may include a memory, a processor, and a bus system. The memory is configured to store a program, and the processor is configured to execute the program in the memory. The following steps are included: The bus system is configured to connect the memory and the processor, so that the memory and the processor communicate with each other. The processor is configured to perform the method according to any one of the first aspect or the possible implementations of the first aspect, or the intelligent driving device includes the obstacle detection apparatus according to the second aspect.

According to a fifth aspect, this application provides a computer storage medium. The computer storage medium stores a computer program, and when the program is executed by a computer, the computer is enabled to perform the method according to any one of the first aspect or the possible implementations of the first aspect.

According to a sixth aspect, this application provides a computer program product. When the computer product is executed by a computer, the method according to any one of the first aspect or the possible implementations of the first aspect is implemented.

According to a seventh aspect, this application provides a chip system. The chip system includes a processor, configured to implement a function of the intelligent driving device in the method according to the foregoing aspects. In a possible design, the chip system further includes a memory, configured to store program instructions and/or data. The chip system may include a chip, or may include a chip and another discrete component.

According to an eighth aspect, an embodiment of this application provides a circuit system. The circuit system includes a processing circuit, and the processing circuit is configured to perform the method according to any one of the first aspect or the possible implementations of the first aspect.

The solutions according to the second aspect to the eighth aspect are used to implement or cooperate with the method according to the first aspect or the possible implementations of the first aspect, and therefore can achieve same or corresponding beneficial effects as the first aspect. Details are not described herein again.

## BRIEF DESCRIPTION OF DRAWINGS

FIG. 1a is a diagram of a structure of an autonomous driving vehicle according to an embodiment of this application;

FIG. 1b is a schematic flowchart of an obstacle detection method according to an embodiment of this application;

FIG. 2 is a diagram of a scan angle of a lidar;

FIG. 3 is another schematic flowchart of an obstacle detection method according to an embodiment of this application;

FIG. 4 is a diagram of converting three-dimensional point cloud data into a range image;

FIG. 5 is a diagram of an occupancy grid map according to this application;

FIG. 6a is a diagram of distribution of a laser beam in a horizontal direction on a surface of an obstacle according to this application;

FIG. 6b is a diagram of distribution of a laser beam in a vertical direction on a surface of an obstacle according to this application;

FIG. 7 is a diagram of obstacle clustering according to this application;

FIG. 8 is a diagram of a structure of an obstacle detection apparatus according to an embodiment of this application;

FIG. 9 is a diagram of another structure of an obstacle detection apparatus according to an embodiment of this application; and

FIG. 10 is a diagram of a structure of an intelligent driving device according to an embodiment of this application.

## DESCRIPTION OF EMBODIMENTS

The following clearly and completely describes the technical solutions in embodiments of this application with reference to accompanying drawings in embodiments of this application.

The following clearly and completely describes the technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application. A person skilled in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "have", and any other variants mean to cover non-exclusive inclusion. For example, a process, method, system, product, or device that includes a series of steps or modules is not necessarily limited to those steps or modules, but may include other steps or modules not expressly listed or inherent to such a process, method, system, product, or device.

The term "and/or" in this application describes an association relationship for describing associated objects, and indicates that three relationships may exist. For example, A and/or B may indicate the following three cases: Only A exists, both A and B exist, and only B exists. In addition, the character "/" in this application generally indicates an "or" relationship between the associated objects.

It should be further noted that, in some alternative implementations, the marked function/action may not appear in an order of the accompanying drawings. For example, depending on the function/action involved, the two accompanying drawings shown in succession may actually occur simultaneously in substance or may sometimes be executed in the reverse order.

In embodiments of this application, unless otherwise specified, "at least one" means one or more, and "a plurality of" means two or more. It may be understood that, in this application, both "when" and "if" mean that an apparatus performs corresponding processing in an objective situation, but do not constitute a limitation on time, do not require that the apparatus has a determining action during implementation, and do not mean any other limitation. In addition, the specific term "example" herein means "used as an example, an embodiment, or illustration". Any embodiment described as an "example" is not necessarily explained as being superior or better than other embodiments.

For ease of understanding, the following describes a scenario to which the obstacle detection method provided in embodiments of this application is applied. The solutions provided in embodiments of this application may be applied to an intelligent driving device. It should be noted that the intelligent driving device has a wide type and application scope, and is not limited to an intelligent vehicle. The intelligent driving device may be the intelligent vehicle, an intelligent machine device independent of the vehicle, or a mobile terminal, an intelligent robot, or another intelligent device that can run a computer program of the obstacle detection method, for example, navigation and obstacle avoidance of an indoor warehouse robot.

In this application, an example in which the intelligent driving device is an autonomous driving vehicle is used to describe an application scenario of the obstacle detection method provided in this application. FIG. 1a is a diagram of a structure of an autonomous driving vehicle according to an embodiment of this application.

An autonomous driving vehicle 10 is configured to be in a fully or partially autonomous driving mode. For example, the autonomous driving vehicle 10 may control the autonomous driving vehicle 10 itself in the autonomous driving mode, and may determine, through a manual operation, current statuses of the vehicle and an ambient environment of the vehicle, determine a possible behavior of at least one another vehicle in the ambient environment, determine a confidence level corresponding to a possibility that the another vehicle performs the possible behavior, and control the autonomous driving vehicle 10 based on determined information. When the autonomous driving vehicle 10 is in the autonomous driving mode, the autonomous driving vehicle 10 may be set to operate without interacting with a person.

The autonomous driving vehicle 10 may include various subsystems, for example, a travel system 102, a sensor system 104, a control system 106, one or more peripheral devices 108, a power supply 110, a computer system 112, and a user interface 116. Optionally, the autonomous driving vehicle 10 may include more or fewer subsystems, and each subsystem may include a plurality of components. In addition, each subsystem and component of the autonomous driving vehicle 10 may be interconnected in a wired or wireless manner.

The travel system 102 may include a component for providing power to the autonomous driving vehicle 10. In an embodiment, the travel system 102 may include an engine 118, an energy source 119, a transmission apparatus 120, and a wheel/tire 121.

The engine 118 may be an internal combustion engine, a motor, an air compression engine, or another type of engine combination, for example, a hybrid engine including a gasoline engine and a motor, or a hybrid engine including an internal combustion engine and an air compression engine. The engine 118 converts the energy source 119 into mechanical energy. Examples of the energy source 119 include gasoline, diesel, another petroleum-based fuel, propane, another compressed gas-based fuel, ethanol, a solar panel, a battery, and another power source. The energy source 119 may also provide energy for another system of the autonomous driving vehicle 10. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that can be coupled to one or more wheels 121.

The sensor system 104 may include several sensors that sense information about an ambient environment of the autonomous driving vehicle 10. For example, the sensor system 104 may include a global positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include a sensor (for example, a vehicle-mounted air quality monitor, a fuel gauge, or an oil temperature gauge) of an internal system of the monitored autonomous driving vehicle 10. Sensor data from one or more of these sensors may be used to detect an object and corresponding features (a location, a shape, a direction, a speed, and the like) of the object. Such detection and recognition are key functions of a safe operation of the autonomous driving vehicle 10.

The global positioning system 122 may be configured to estimate a geographical location of the autonomous driving vehicle 10. The IMU 124 is configured to sense a location and an orientation change of the autonomous driving vehicle 10 based on inertial acceleration. In an embodiment, the IMU 124 may be a combination of an accelerometer and a gyroscope. The radar 126 may sense an object in the ambient environment of the autonomous driving vehicle 10 through a radio signal, and may be specifically represented as a millimeter-wave radar or a lidar. In some embodiments, in addition to sensing the object, the radar 126 may be further configured to sense a speed and/or a forwarding direction of the object. The laser rangefinder 128 may use a laser to sense an object in an environment in which the autonomous driving vehicle 10 is located. In some embodiments, the laser rangefinder 128 may include one or more laser sources, a laser scanner, one or more detectors, and another system component. The camera 130 may be configured to capture a plurality of images of the ambient environment of the autonomous driving vehicle 10. The camera 130 may be a static camera or a video camera.

The control system 106 controls operations of the autonomous driving vehicle 10 and components of the autonomous driving vehicle 10. The control system 106 may include various components, including a steering system 132, a throttle 134, a brake unit 136, a computer vision system 140, a route control system 142, and an obstacle avoidance system 144.

The steering system 132 may operate to adjust a forwarding direction of the autonomous driving vehicle 10. For example, in an embodiment, the steering system 132 may be a steering wheel system. The throttle 134 is configured to: control an operating speed of the engine 118 and further control a speed of the autonomous driving vehicle 10. The brake unit 136 is configured to control the autonomous driving vehicle 10 to decelerate. The brake unit 136 may use friction to slow down the wheel 121. In another embodiment, the brake unit 136 may convert kinetic energy of the wheel 121 into a current. Alternatively, the brake unit 136 may use another form to slow down a rotational speed of the wheel 121, to control the speed of the autonomous driving vehicle 10. The computer vision system 140 may operate to process and analyze an image captured by the camera 130, to recognize objects and/or features in the ambient environment of the autonomous driving vehicle 10. The objects and/or the features may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to: draw a map for an environment, track the object, estimate a speed of the object, and the like. The route control system 142 is configured to determine a traveling route and a traveling speed of the autonomous driving vehicle 10. In some embodiments, the route control system 142 may include a lateral planner 1421 and a longitudinal planner 1422. The lateral planner 1421 and the longitudinal planner 1422 are respectively configured to determine the traveling route and the traveling speed of the autonomous driving vehicle 10 based on data from the obstacle avoidance system 144, the GPS 122, and one or more predetermined maps. The obstacle avoidance system 144 is configured to: identify, evaluate, and avoid, or pass, in another manner, obstacles in the environment of the autonomous driving vehicle 10. The obstacles may be specifically represented as an actual obstacle and a virtual moving object that may collide with the autonomous driving vehicle 10. In an example, the control system 106 may add or replaceably include a component other than the components shown and described. Alternatively, the control system 106 may delete some of the components shown above.

The autonomous driving vehicle 10 interacts with an external sensor, another vehicle, another computer system, or a user through the peripheral device 108. The peripheral device 108 may include a wireless communication system 146, an on-board computer 148, a microphone 150, and/or a speaker 152. In some embodiments, the peripheral device 108 provides a means for the user of the autonomous driving vehicle 10 to interact with the user interface 116. For example, the on-board computer 148 may provide information for the user of the autonomous driving vehicle 10. The user interface 116 may further operate the on-board computer 148 to receive an input of the user. The on-board computer 148 may perform an operation through a touchscreen. In another case, the peripheral device 108 may provide a means for the autonomous driving vehicle 10 to communicate with another device in the vehicle. For example, the microphone 150 may receive audio (for example, a voice command or another audio input) from the user of the autonomous driving vehicle 10. Similarly, the speaker 152 may output audio to the user of the autonomous driving vehicle 10.

The wireless communication system 146 wirelessly communicates with one or more devices directly or through a communication network. For example, the wireless communication system 146 may use 3G cellular communication, 4G cellular communication, 5G cellular communication, wireless local area network (wireless local area network, WLAN) communication, or the like. In some embodiments, the wireless communication system 146 may directly communicate with a device through an infrared link, Bluetooth, or ZigBee. Other wireless protocols such as various vehicle communication systems may be used. For example, the wireless communication system 146 may include one or more dedicated short range communication (dedicated short-range communication, DSRC) devices. These devices may include public and/or private data communication between vehicles and/or between roadside stations.

The power supply 110 may supply power to the components of the autonomous driving vehicle 10. In an embodiment, the power supply 110 may be a rechargeable lithium-ion or lead-acid battery. One or more battery strings of such a battery may be configured as the power supply to supply power to the components of the autonomous driving vehicle 10. In some embodiments, the power supply 110 and the energy source 119 may be implemented together, for example, in some pure electric vehicles.

Some or all functions of the autonomous driving vehicle 10 are controlled by the computer system 112. The autonomous driving vehicle 10 may include one or more computer systems 112. Each computer system 112 may include at least one processor 1003. The processor 1003 executes instructions 115 stored in a non-transitory computer-readable medium such as the memory 1004. If there are a plurality of computer systems 112 in the autonomous driving vehicle 10, the plurality of computer systems 112 may control each subsystem or component of the autonomous driving vehicle 10 in a distributed manner. In other words, each component or subsystem of the autonomous driving vehicle 10 may include respective processors. For example, some components such as a steering component and a deceleration component may include respective processors, and the processor performs only calculation related to a component-specific function.

The processor 1003 may be any conventional processor, for example, a central processing unit (central processing unit, CPU). Optionally, the processor 1003 may be a dedicated device such as an application-specific integrated circuit (application-specific integrated circuit, ASIC) or another hardware-based processor.

Although FIG. 1a functionally illustrates the processor, the memory, and another component of the computer system 112 in a same block, a person of ordinary skill in the art should understand that the processor or the memory may actually include a plurality of processors or memories that are not stored in a same physical housing. For example, the memory 1004 may be a hard disk drive or another storage medium located in a housing different from that of the computer system 112. Therefore, a reference to the processor 1003 or the memory 1004 is understood as a reference to a set of processors or memories that may or may not operate in parallel.

In some embodiments, the memory 1004 may include the instructions 115 (for example, program logic). The instructions 115 may be executed by the processor 1003 to perform various functions of the autonomous driving vehicle 10, including those functions described above. The memory 1004 may also include additional instructions, including instructions to send data to, receive data from, interact with, and/or control one or more of the travel system 102, the sensor system 104, the control system 106, and the peripheral device 108. In addition to the instructions 115, the memory 1004 may further store data, for example, a road map, route information, vehicle data of the vehicle such as a location, a direction, and a speed, and other information. Such information may be used by the autonomous driving vehicle 10 and the computer system 112 during operation of the autonomous driving vehicle 10 in an autonomous mode, a semi-autonomous mode, and/or a manual mode. The user interface 116 is configured to provide information for or receive information from the user of the autonomous driving vehicle 10. Optionally, the user interface 116 may include one or more input/output devices in a set of peripheral devices 108, for example, the wireless communication system 146, the on-board computer 148, the microphone 150, and the speaker 152.

The computer system 112 may control the functions of the autonomous driving vehicle 10 based on inputs received from each subsystem (for example, the travel system 102, the sensor system 104, and the control system 106) and from the user interface 116. If there are the plurality of computer systems 112 in the autonomous driving vehicle 10, the plurality of computer systems 112 may exchange data in a wired communication manner, to control the autonomous driving vehicle 10. For example, the computer system 112 may control the steering system 132 by using an input from the control system 106, to avoid an obstacle detected by the sensor system 104 and the obstacle avoidance system 144. In some embodiments, the computer system 112 may operate to provide control over many aspects of the autonomous driving vehicle 10 and the subsystems of the autonomous driving vehicle 10.

Optionally, one or more of the foregoing components may be installed separately from or associated with the autonomous driving vehicle 10. For example, the memory 1004 may be partially or completely separated from the autonomous driving vehicle 10. The foregoing components may be communicatively coupled together in a wired and/or wireless manner.

Optionally, the foregoing components are merely examples. During actual application, the components in the foregoing modules may be added or deleted according to an actual requirement. FIG. 1a should not be construed as a limitation on embodiments of this application. An autonomous driving vehicle traveling on a road, such as the autonomous driving vehicle 10, may recognize an object in an ambient environment of the autonomous driving vehicle, to determine adjustment on a current speed. The object may be another vehicle, a traffic control device, or another type of object. In some examples, each recognized object may be considered independently, and a speed of the autonomous driving vehicle to be adjusted may be determined based on features of each object, such as the current speed and acceleration of the object, and a spacing between the object and the vehicle.

Optionally, the autonomous driving vehicle 10 or a computing device associated with the autonomous driving vehicle 10 (for example, the computer system 112, the computer vision system 140, or the memory 1004 in FIG. 1a) may predict behavior of the identified object based on the feature of the identified object and a state (for example, traffic, rain, or ice on a road) of the ambient environment. Optionally, all recognized objects depend on behavior of each other. Therefore, all the recognized objects may be considered together to predict behavior of a single recognized object. The autonomous driving vehicle 10 can adjust the speed of the autonomous driving vehicle 10 based on the predicted behavior of the identified object. In other words, the autonomous driving vehicle 10 can determine, based on the predicted behavior of the object, a stable state (for example, accelerated, decelerated, or stopped) to which the vehicle needs to be adjusted. In this process, another factor may also be considered to determine the speed of the autonomous driving vehicle 10, for example, a lateral location of the autonomous driving vehicle 10 on a road on which the autonomous driving vehicle 10 travels, curvature of the road, and proximity between a static object and a dynamic object. In addition to providing an instruction for adjusting the speed of the autonomous driving vehicle, the computing device may further provide an instruction for modifying a steering angle of the autonomous driving vehicle 10, so that the autonomous driving vehicle 10 follows a given track and/or maintains safe lateral and longitudinal distances from an object near the autonomous driving vehicle 10 (for example, a car in an adjacent lane on the road).

The autonomous driving vehicle 10 may be a car, a truck, a motorcycle, a bus, a ship, an airplane, a helicopter, a lawn mower, a playground vehicle, a construction device, a tram, a golf cart, a train, or the like. This is not specifically limited in embodiments of this application.

Specifically, in a possible implementation, FIG. 1b is a schematic flowchart of an obstacle detection method according to an embodiment of this application. The method may be performed by the computer system 112 shown in FIG. 1a, and further, may be performed by the processor 1003 in the computer system 112. The method specifically includes: S1: Obtain point cloud data that is of a to-be-detected obstacle and that is collected by a radar; and S2: Output a convex hull polygon of the to-be-detected obstacle based on the point cloud data, where the convex hull polygon is obtained based on a spatial distribution feature of the point cloud data projected onto a range image and a location correspondence between the range image and an occupancy grid map. After obtaining the point cloud data of the to-be-detected obstacle through the radar, a vehicle projects the disordered point cloud data onto the range image with a clear neighborhood relationship, so that point cloud data processing efficiency can be improved. In addition, based on the spatial distribution feature of the point cloud data projected onto the range image and the location correspondence between the point cloud data on the range image and the point cloud data on the occupancy grid map, the convex hull polygon is used to indicate a shape and a location of the to-be-detected obstacle, so that obstacle detection accuracy is further improved.

The foregoing describes a scenario to which the obstacle detection method provided in embodiments of this application is applied. The following describes in detail an implementation process of the obstacle detection method provided in embodiments of this application.

First, to better understand solutions in embodiments of this application, the following describes related terms and concepts that may be used in embodiments of this application.

(1) Intelligent driving device

The intelligent driving device may include an intelligent vehicle, for example, an autonomous driving vehicle, and may further include an intelligent machine device independently developed for various specific service scenarios, for example, an intelligent robot or another intelligent device that can run a computer program of an obstacle detection method. The intelligent vehicle is used as an example. The intelligent driving device may include an intelligent device such as a vehicle-mounted computer, a vehicle-mounted controller, or a vehicle driving control system. With rapid development of intelligent driving, intelligent vehicles may currently include the following levels: Level L1: driver assistance. An intelligent vehicle at this level can help a driver complete some driving tasks and only one driving operation. In addition, the driver needs to monitor the driving environment and be prepared to take over at any time. Typical technologies include a lane keeping system and a cruise control system. Level L2: partial automation. An intelligent vehicle at this level can automatically perform acceleration or deceleration and steering at the same time. This means that an adaptive cruise system and the lane keeping system can work together. Level L3: conditional automation. In a specific environment, a vehicle can automatically perform acceleration or deceleration and steering without a driver operation or monitoring an ambient environment of the vehicle. However, a driver needs to be prepared to take over the vehicle at any time, to cope with a situation that an autonomous driving system cannot handle. Level L4: high automation. A driver is not required in an entire traveling process. However, there is also a limitation condition. For example, a vehicle speed cannot exceed a specific value, and a driving area is relatively fixed. In addition, after autonomous driving of this level is implemented, there is no need to install a braking pedal and a throttle pedal. Level L5: full automation. An intelligent vehicle at this level can be fully adaptive to traveling in any traveling environment.

(2) Sensor

The sensor is a detection apparatus, can sense measured information, and convert the sensed information into an electrical signal or other information in a required form according to a specific rule for output, to meet requirements such as information transmission, processing, storage, display, record, and control. Features of the sensor include miniaturization, digitization, intelligence, multifunction, systematization, and networking. The sensor is a primary link of automatic detection and automatic control. An autonomous driving vehicle can identify a road, a vehicle on the road, a pedestrian, an obstacle, a traffic infrastructure, and/or the like through the sensor.

Promotion of the intelligence cannot be implemented without development of the sensor. In addition, with improvement of an intelligence level, an environment that needs to be detected is increasingly complex, and a quantity of sensors may further increase. A vehicle with an assisted driving capability is usually equipped with a plurality of types of sensors, such as a lidar, a millimeter-wave radar, an ultrasonic radar, a camera, and an inertial navigation system.

The following describes the lidar in detail.

The lidar is a radar system that transmits a laser beam to detect features such as a location and a speed of a target. A working principle is to transmit a detection signal (the laser beam) to the target, and then compare a received signal (a target echo) reflected from the target with the transmitted signal. After proper processing, related information of the target can be obtained, such as a distance, an orientation, a height, a speed, a posture, and even a shape and another parameter of the target, so that the target such as an airplane or a missile is detected, tracked, and identified.

A transmitter of the lidar transmits a laser beam. After the laser beam meets an object, the laser beam is diffusely reflected and returns to a laser receiver. A radar module calculates a distance between the transmitter and the object by multiplying a time interval for sending and receiving the signal by a light speed and then dividing a result by two.

The lidar is classified into a single-line radar and a multi-line radar. The single-line radar has only one laser transmitter and receiver. Through rotation of a motor, a line is projected onto the obstacle ahead. Advantages are that a small data volume is processed, efficiency is high, stability is good, and a technology is mature. Disadvantages are that only obstacles at a same height can be detected, but an overall contour cannot be measured. The multi-line radar is classified into a 4-line radar, an 8-line radar, a 16-line radar, a 32-line radar, a 64-line radar, a 128-line radar, and the like. In other words, there are a plurality of transmitters and receivers in a vertical direction. Through the rotation of the motor, a plurality of beams are obtained. A larger quantity of the beams indicates a more complete surface contour of the object.

(3) Range image

The range image (range image), also known as a depth image, is one of forms of lidar scanning. The range image saves three-dimensional point cloud as a 360-degree "photo" of a scanned environment. A row dimension indicates an elevation angle of a laser beam, and a column dimension indicates an azimuth angle. With each incremental rotation around a z axis, a lidar sensor may return many distance and intensity measurement values, which are then stored in a corresponding unit of the range image.

For example, refer to FIG. 2. FIG. 2 is a diagram of a scan angle of a lidar. It is assumed that a radar in FIG. 2 is an m-line rotary scanning lidar. A vertical field of view FOV of the lidar is divided into two parts: FOV_up and FOV_down. Generally, a value of FOV_up is a positive number, and a value of FOV_down is a negative number. In this case, FOV = FOV_up + abs(FOV _down). Point cloud data obtained through one circle of rotation and scanning of the lidar is equivalent to a hollow cylinder centered on the lidar itself. If the cylinder is expanded, the point cloud data may be projected onto any image plane. The image plane is referred to as the range image.

(4) Occupancy grid map

The occupancy grid map (Occupancy Grid Map) is one of the most commonly used map construction methods in the field of intelligent driving (for example, autonomous driving vehicles and robots). The map is refined into grids of specific precision, and then a probability that each grid on the occupancy grid map is occupied is determined based on environment information returned by a sensor, to provide a basis for route planning. The occupancy grid map is a two-state map. To be specific, each grid has only two states: occupied (occupied) or free space (free space).

A detection area is divided into grids of a specific quantity and size, a probability that each grid is occupied is determined based on a detection result of a radar, and the probability that each grid is occupied is reflected to a corresponding grid in the detection area, so that the occupancy grid map can be obtained.

(5) Three-dimensional Cartesian coordinate system

The three-dimensional Cartesian coordinate system is formed by adding a third dimension coordinate based on a planar, two-dimensional Cartesian coordinate system according to a righthand rule. Three-dimensional Cartesian coordinates (x, y, z) are an expression of a point in the three-dimensional Cartesian coordinate system. x, y, and z are coordinate values of an x axis, a y axis, and a z axis that have a common origin and are orthogonal (that is, perpendicular) to each other.

(6) Spherical coordinate system

The spherical coordinate system is a type of a three-dimensional coordinate system, and is used to determine locations of a point, a line, a plane, and a body in three-dimensional space. The spherical coordinate system uses an origin as a reference point, and includes an azimuth angle, an elevation angle, and a distance.

In mathematics, the spherical coordinate system (Spherical coordinate system) is a three-dimensional orthogonal coordinate system that uses spherical coordinates ($r, \theta, \varphi$) to indicate a location of a point p in the three-dimensional space. A geometric significance of the spherical coordinates is a distance r from the origin to the point p, an elevation angle $\theta$ between a connection line from the origin to the point p and a positive z axis, and an azimuth angle $\varphi$ between a projection line of the connection line from the origin to the point p on an xoy plane and a positive x axis.

(7) Four-connected

An objective of the four-connected is partition of an image.

A four-connected area or a four-neighborhood area means upper, lower, left, or right locations of a corresponding pixel location, which are immediately adjacent locations. There are four directions in total. Therefore, such an area is referred to as the four-connected area, and is also referred to as the four-neighborhood area.

(8) Eight-connected

An objective of the eight-connected is also partition of an image.

An eight-connected area or an eight-neighborhood area means upper, lower, left, right, upper left, upper right, lower left, or lower right locations of a corresponding location, which are immediately adjacent and diagonally adjacent locations. There are eight directions in total. Therefore, such an area is referred to as the eight-connected area, and is also referred to as the eight-neighborhood area.

The foregoing describes the technical terms provided in embodiments of this application. To better understand the technical solutions provided in embodiments of this application, the following describes currently used obstacle detection methods by using an example in which an intelligent driving device is an autonomous driving vehicle.

Currently commonly used solutions may be classified, based on data representation, into two categories: point cloud-based representation solutions and grid-based representation solutions. The solutions may be classified, based on feature representation, into two categories: manual rule-based solutions (Rule-Based Methods) and learning-based (Learning-based) solutions. Representative solutions are selected from the foregoing several methods to describe core technology points and corresponding technical defects.

Solution 1: Performing obstacle prediction directly based on point cloud data

Corresponding to an application scenario of this solution, Solution 1 mainly includes the following core steps:

(1) Perform ground point filtering on original point cloud based on a constructed ground model.

(2) Perform filtering and clustering on point cloud obtained through ground point filtering, to obtain a target obstacle.

However, Solution 1 mainly has the following disadvantages:

(a) Obstacle detection effect in Solution 1 is strongly related to ground filtering effect. Excessive ground filtering easily causes missed detection of targets, and insufficient ground filtering easily causes a ground point cloud to be falsely detected as the target.

(b) Although a point cloud-level clustering operation that is used retains most original point cloud information, calculation complexity of the operation is directly related to a quantity of point clouds, and a calculation amount is large. As a result, the solution is not suitable for application on an autonomous driving vehicle to some extent.

Solution 2: Determining an attribute of a grid based on features such as a height difference of point clouds and reflection intensity in the grid

Corresponding to an application scenario of this solution, Solution 2 mainly includes the following core steps:

(1) Project original point cloud data onto a two-dimensional grid map.

(2) Determine an attribute of each projected grid based on features such as a height difference of point clouds and reflection intensity in each grid in a grid map.

However, Solution 2 mainly has the following disadvantages:

In Solution 2, a three-dimensional point cloud is projected onto a two-dimensional occupancy grid through occupancy grid representation. Although calculation efficiency is improved, feature extraction of the grid is insufficient, and only information such as the height difference of the point clouds and the reflection intensity of the laser light is used. As a result, obstacle detection accuracy is low, and false detection and missed operation are serious to some extent.

Solution 3: Predicting an obstacle by using a deep learning technology

Corresponding to an application scenario of this solution, in Solution 3, point cloud data collected by a lidar is mainly processed through deep learning, and a prediction result of the obstacle is output.

However, Solution 3 mainly has the following disadvantages:

A solution performed by using the deep learning technology is generally data-dependent, depending on a large amount of labeled data. As a result, labor and time costs of data mining and labeling and model iteration are high to some extent.

In some solutions in which the obstacle is predicted by using the deep learning, a close-set (Close-Set) framework is used, and only fixed and limited types of targets can be detected. This cannot adapt to a requirement of detecting various unknown objects, special-shaped objects, and undefined targets in the field of autonomous driving perception. There are also some solutions that use an open-set (Open-Set) learning framework. Different from closed-set learning, the open-set framework expands categories through incremental learning. However, a problem of high model iteration costs still cannot be avoided. In addition, for obstacle detection of a general target, a deep learning-based method is still in an academic research phase, and has a specific limitation in mass production and implementation in autonomous driving.

To overcome defects of the foregoing obstacle detection methods, this application provides an obstacle detection method. For ease of understanding, the following specifically describes an obstacle detection method provided in embodiments of this application with reference to the accompanying drawings and application scenarios. It may be understood that the autonomous driving vehicle shown in FIG. 1a is merely one application scenario, and the obstacle detection method may also be applied to an intelligent device such as an intelligent robot. This is not specifically limited herein.

FIG. 3 is another schematic flowchart of an obstacle detection method according to an embodiment of this application. In an optional embodiment, the obstacle detection method shown in FIG. 3 may be applied to the autonomous driving vehicle 10 shown in FIG. 1a. As shown in FIG. 3, the obstacle detection method includes step 301 to step 309.

301: A vehicle obtains point cloud data that is of a to-be-detected obstacle and that is collected by a lidar.

In this embodiment of this application, the vehicle collects point cloud data of an ambient environment of the vehicle through the lidar, to obtain three-dimensional coordinates (X,Y,Z) of the point cloud data in a Cartesian coordinate system. The ambient environment includes at least one obstacle.

It may be understood that the point cloud data in this embodiment is a set of point cloud data of at least one to-be-detected obstacle.

In addition, it should be noted that obstacle detection is mainly performed through a lidar sensor, a millimeter-wave radar sensor, a visual sensor, and the like. However, there are still the following disadvantages:

(1) The millimeter-wave radar sensor can obtain information such as a location and a speed of the obstacle. A feature thereof is that the obtained information such as the location and the speed is accurate. However, finally determined information such as the location and the speed of the obstacle does not include contour information of the obstacle. In other words, information such as a size and a shape of the obstacle cannot be obtained, and the obstacle may be falsely detected.

(2) The visual sensor cannot meet requirements of an autonomous driving perception system and a whole autonomous system, detection precision is poor, and there is a lack of depth information. As a result, an accurate location of the obstacle in three-dimensional space cannot be obtained.

(3) Existing solutions for performing obstacle detection based on point cloud through a lidar still have specific technical bottlenecks, and have disadvantages in aspects such as efficiency of data representation, a representation capability of point cloud feature extraction, data dependency, and generalization of a general target. A related algorithm cannot meet a requirement for implementation of an autonomous driving scenario.

In this embodiment of this application, after the point cloud data of the ambient environment of the vehicle is obtained through the lidar sensor, the vehicle can perform feature extraction and obstacle determining based on the point cloud data, to accurately determine information such as the location and a contour of the obstacle. The representation capability of the point cloud feature extraction is mainly reflected in feature extraction performed based on a feature of laser light and an occlusion feature of the obstacle. The data dependency is a concept for a deep learning technology. Data training and model iteration operations are not required.

It should be noted that the lidar may be disposed on the vehicle, or may be disposed on another device or environment independent of the vehicle. Correspondingly, an origin of a radar coordinate system may be specifically specified according to an actual requirement or an experiment. This is not limited herein.

302: The vehicle creates a range image.

In this embodiment of this application, the vehicle specifies a height $Num_{row}$ and a width $Num_{col}$ of the range image, to create the corresponding range image.

It may be understood that the range image is a compact point cloud expression form with high information representation. Each grid or each point on the range image is in a one-to-one correspondence with the point cloud data.

Optionally, the height of the range image may be specified based on a quantity of lines of the lidar, or may be specified based on a multiple of the quantity of lines of the lidar or according to an actual requirement. This is not limited herein.

Optionally, the width of the range image may be specified based on horizontal resolution of the lidar, or may be specified based on a multiple of the horizontal resolution or according to an actual requirement. This is not limited herein.

303: The vehicle projects the point cloud data onto the range image, to obtain coordinates of the point cloud data on the range image.

In this embodiment of this application, after the point cloud data of the to-be-detected obstacle is collected through the lidar, the vehicle projects the point cloud data of the to-be-detected obstacle onto the range image based on the created range image, to obtain the coordinates of the point cloud data on the range image.

The following specifically describes a process of converting the coordinates of the three-dimensional point cloud data into the two-dimensional range image. For example, refer to FIG. 4. FIG. 4 is a diagram of converting the three-dimensional point cloud data into the range image.

A point p($X_1$, $Y_1$, $Z_1$) on the left of FIG. 4 needs to be projected onto the range image, to obtain a new coordinate representation. First, in the left diagram, it is assumed that an X axis is a front view of the lidar, namely, a forwarding direction of the vehicle. A connection line between the point and an origin forms an angle, which is a pitch (pitch) angle, with an XOY plane (which is understood as ground). A connection line between a projection of the point on the XOY plane and the origin forms a yaw (yaw) angle with the center line X axis or an XOZ plane.

In an optional implementation, in corresponding actual physical space, a central location of a tailstock of the vehicle may be used as an origin. Each pixel on the range image is represented by using spherical coordinates (yaw angle,pitch angle,distance) (($\alpha_p$, $\beta_p$, $r_p$)) corresponding to the pixel, the spherical coordinates are projected onto a corresponding pixel location on the range image, and a distance value $r_p$ of the point is filled at the corresponding pixel location. Projection formulas of the range image are specifically as follows:

$$Step_{pitch} = \frac{\max(pitch) - \min(pitch)}{Num_{row} - 1}$$

$$Step_{yaw} = \frac{\max(yaw) - \min(yaw)}{Num_{col} - 1}$$

$$row_i = \frac{\max(pitch) - pitch_i}{Step_{pitch}}$$

$$col_i = \frac{\max(yaw) - yaw_i}{Step_{yaw}}$$

For an $i^{th}$ point in the point cloud data, corresponding row and column coordinates of the point $i$ in a coordinate system corresponding to the range image are ($row_i$,$col_i$). $max(pitch)$ is a positive value of an angle range of the lidar in a vertical direction, $min(pitch)$ is a negative value of the angle range of the lidar in the vertical direction, $max(yaw)$ is a positive value of an angle range of the lidar in a horizontal direction, and min(*yaw*) is a negative value of the angle range of the lidar in the horizontal direction. $pitch_i$ is a pitch angle corresponding to the point i, and $yaw_i$ is a yaw angle corresponding to the point *i*. $Step_{pitch}$ indicates angular resolution of the range image in the vertical direction, and $Step_{yaw}$ indicates angular resolution of the range image in the horizontal direction.

It should be noted that values of the yaw angle *yaw* and the pitch angle *pitch* may be directly determined based on parameters of the lidar before delivery, or may be determined based on actually measured angles of the lidar in the vertical direction and the horizontal direction if higher precision is required. The values may be specified according to an actual requirement. This is not limited herein.

In addition, it should be noted that, for coordinates of the range image in the right diagram in FIG. 4, an upper left corner is an origin. In an actual operation process, a location of the origin may be specified according to an actual requirement or an experiment while it is ensured that three-dimensional coordinates of the point cloud data are in a one-to-one correspondence with coordinates of the point cloud data projected onto the range image. This is not limited herein.

Besides, in the actual operation process, an origin corresponding to the point cloud data in an actual geographical location in the left diagram in FIG. 4 may be adjusted according to an actual requirement. After a location of the point cloud data in a lidar coordinate system is determined through the lidar, a location p of the point cloud data with respect to the actual origin in Cartesian coordinates is obtained through coordinate conversation. That the central location of the tailstock of the vehicle is used as the origin is merely an optional implementation. This is not limited herein.

It may be understood that, due to a huge, sparse, and irregular data volume of the three-dimensional point cloud data, processing the original three-dimensional data directly is usually challenging and time-consuming. The point cloud data is disordered, and consequently, it is time-consuming to search for adjacent points among tens of thousands of points. However, a neighborhood spatial relationship on the range image is clear. The coordinates of the point cloud data are converted into the coordinates on the range image, and points that are adjacent to each other are usually arranged in adjacent locations, so that points that are close in space can be found based on a location relationship on the image. In this way, searching efficiency is improved, and subsequent feature extraction is facilitated.

304: The vehicle creates an occupancy grid map.

In this embodiment of this application, the vehicle performs division and segmentation by using an X-axis direction as a reference, to perform dynamic division on occupancy grids, and performs division on the occupancy grids in a dynamic resolution manner when previous and latter threshold exceed a specific threshold, to create a non-uniform occupancy grid map. This improves adaptability of this embodiment of this application in different distance intervals to some extent.

It may be understood that the point cloud data collected by the lidar is distributed densely in a short distance and sparsely in a long distance. If fixed grid division resolution is used for the entire occupancy grid map in an even division manner, a valid feature cannot be extracted at a distance due to sparse point cloud data.

For example, refer to FIG. 5. FIG. 5 is a diagram of an occupancy grid map according to this application. Specific division formulas are as follows:

$$R_X = 0.2\ m$$

$$R_{angle} = 0.2°$$

$$G_X = 5.0$$

$$R_Y = \max\left(G_X \cdot X \cdot \tan\left(R_{angle}\right), R_X\right)$$

$R_X$ indicates sampling resolution in an X direction. X indicates a horizontal coordinate of a point cloud in the Cartesian coordinate system. $R_{angle}$ indicates angular resolution of the lidar, that is, the horizontal resolution of the lidar. $G_X$ indicates a gain coefficient. $R_Y$ indicates sampling resolution in a Y direction. max (a, b) indicates a comparison function for taking a larger value, to output a larger value between a and b. Constant sampling resolution is used in the X direction, to construct evenly spaced occupancy grids in the X direction. Dynamic resolution related to an X coordinate is designed in the Y direction, to construct non-uniform occupancy grids in the Y direction.

It should be noted that a value of $R_X$ depends on obstacle detection precision. A smaller value indicates higher obstacle detection precision. In this embodiment of this application, 0.2 *m*, 0.2°, *and* 5.0 are merely one of optional values, which are not limited herein.

305: The vehicle projects the point cloud data onto the occupancy grid map, to obtain coordinates of the point cloud data on the occupancy grid map.

In this embodiment of this application, after obtaining the point cloud data through the lidar, the vehicle projects the point cloud data onto the constructed occupancy grid map, and converts the three-dimensional coordinates of the point cloud data in the Cartesian coordinate system into the corresponding coordinates or locations on the occupancy grid map, to establish an association relationship with the occupancy grid map.

Further, a method for calculating the coordinates of the point cloud data on the occupancy grid map is specifically:

$$O_x = \frac{X}{R_X}$$

$$O_y = \frac{Y}{R_Y}$$

$O_x$ and $O_y$ respectively indicate a horizontal coordinate and a vertical coordinate of the point cloud in the occupancy grid. $X$ and $Y$ respectively indicate the horizontal coordinate and a vertical coordinate of the point cloud in the Cartesian coordinate system.

It should be understood that there is no strict limitation on a time sequence and an execution sequence among steps 302 and 303 and steps 304 and 305. This is not limited in this application. After the point cloud data is projected onto the range image and the occupancy grid map separately, a location correspondence between the point cloud data on the range image and the point cloud data on the occupancy grid map may be indirectly determined. Specifically, the coordinates of the point cloud data in the Cartesian coordinate system may correspond to the row and column coordinates on the range image and grid coordinates on the occupancy grid map separately. In this case, a pixel to which the point cloud data is projected and that is on the range image may also correspond to the grid coordinates on the occupancy grid map. However, it should be understood that, because the range image and the occupancy grid map use different resolution and construction methods, corresponding row and column coordinates of each pixel on the range image do not form a one-to-one correspondence with coordinates of each grid on the occupancy grid map.

306: The vehicle traverses each row in the range image, and determines second information that meets a continuous distribution condition in the horizontal direction.

In this embodiment of this application, after projecting the point cloud data onto the range image and the occupancy grid map separately, the vehicle can determine the location correspondence between the point cloud data on the range image and the point cloud data on the occupancy grid map. Then, the vehicle traverses each row in the range image based on a ranging feature of the lidar and an occlusion property of a plane of the obstacle, to determine and select, on a surface of the obstacle, the second information that meets the continuous distribution condition in the horizontal direction. The second information includes a set of first quantities of the point cloud data continuously distributed in the horizontal direction of the range image.

Specifically, refer to FIG. 6a. FIG. 6a is a diagram of distribution of a laser beam in a horizontal direction on a surface of an obstacle according to this application. It can be learned from FIG. 6a that, when the laser beam transmitted by the lidar is projected onto the surface of the obstacle, point cloud data that is continuously distributed may be generated in a horizontal direction of the surface of the obstacle due to the occlusion property of the obstacle.

Optionally, in a possible implementation, traversing each row in the range image to determine the second information includes the following specific steps.

For each pixel in each row in the range image, if there is first point cloud data projected onto the pixel, obtain a first location of the first point cloud data on the occupancy grid map based on the location correspondence.

Determine whether information about at least one piece of point cloud data is bound to the first location, to obtain a determining result, where the information includes corresponding row and column coordinates that are of the at least one piece of point cloud data and that are on the range image.

If the determining result is yes, obtain a maximum value of the corresponding column coordinate of the at least one piece of point cloud data on the range image.

If a difference between a corresponding column coordinate of the first point cloud data on the range image and the maximum value is less than or equal to a first value, bind the information about the first point cloud data to the first location, and increment a value of the first quantity bound to the first location by one.

If the determining result is no, bind the information about the first point cloud data to the first location, and set the value of the first quantity bound to the first location to an initial value.

For example, to clearly describe this embodiment of this application, it is assumed that a correspondence between pixel coordinates on the range image and coordinates in the occupancy grid is shown in Table 1.

Table 1

| Pixel coordinates | Grid coordinates |
|---|---|
| (1,3) | (3,3) |
| (1,5) | (3,3) |
| (2,1) | (3,3) |
| (2,2) | (5,2) |
| (2,3) | (3,3) |
| (2,4) | (4,1) |
| (2,5) | (5,2) |

Specific steps are as follows:

(1) Traverse each row in the range image. It is assumed that when a second row is traversed, there is the first point cloud data projected onto a pixel (2,1) on the range image, a corresponding first location (3,3) of the first point cloud data on the occupancy grid map is obtained.

(2) Determine whether the information about the at least one piece of point cloud data is bound to the first location (3,3). It is assumed that before the second row is traversed, information about (1,3) and (1,5) in a first row has been bound to the first location (3,3). In this case, the step in which the determining result is yes is performed. To be specific, a maximum value of column coordinates of all point cloud data bound to the first location (3,3) on the range image is obtained, that is, a maximum value of column coordinates of (1,3) and (1,5) is obtained, which is 5.

(3) Obtain, through calculation, a difference 3 between a column coordinate 2 of the coordinates (2,1) of the first point cloud data on the range image and the maximum value 5 of the column coordinates. If the first value is greater than or equal to 3, it indicates that the first point cloud data and point cloud data in (1,3) and (1,5) meet the continuous distribution condition in the horizontal direction. In this case, the row and column coordinates (2,1) of the first point cloud data are bound to the first location (3,3). In addition, the value of the first quantity is increased by one.

(4) It is assumed that before the second row is traversed, neither (1,3) nor (1,5) in Table 1 corresponds to the first location (3,3) in the occupancy grid. In this case, the step in which the determining result is no is performed. To be specific, the row and column coordinates (2,1) of the first point cloud data on the range image are bound to the first location (3,3), and a value of the first value is set to the initial value.

After the foregoing steps are performed, a set of first quantities of the point cloud data continuously distributed in the horizontal direction of the range image in, for example, a grid corresponding to the first location may be calculated. The set of first quantities is also referred to as a horizontal continuity feature $C_{col}$, that is, a quantity of laser beams in the horizontal direction in a same occupancy grid.

It should be noted that the first value and the first quantity may be specified as required or according to an experiment. This is not limited herein. In addition, the data shown in Table 1 is merely assumed data for ease of description, is merely an example for description, and does not have any association relationship with actual data.

307: The vehicle traverses each column in the range image, and determines third information that meets a continuous distribution condition in the vertical direction.

In this embodiment of this application, after projecting the point cloud data onto the range image and the occupancy grid map separately, the vehicle can determine the location correspondence between the point cloud data on the range image and the point cloud data on the occupancy grid map. Then, the vehicle traverses each column in the range image based on the ranging feature of the lidar and the occlusion property of the plane of the obstacle, to determine and select, on the surface of the obstacle, the third information that meets the continuous distribution condition in the vertical direction. The third information includes a set of second quantities of the point cloud data continuously distributed in the vertical direction of the range image.

Specifically, refer to FIG. 6b. FIG. 6b is a diagram of distribution of a laser beam in a vertical direction on a surface of an obstacle according to this application. It can be learned from FIG. 6b that, when the laser beam transmitted by the lidar is projected onto the surface of the obstacle, point cloud data that is continuously distributed may be generated in a vertical direction of the surface of the obstacle due to the occlusion property of the obstacle.

Optionally, in a possible implementation, traversing each column in the range image to determine the third information includes the following specific steps.

For each pixel in each column in the range image, if there is second point cloud data projected onto the pixel, obtain a second location of the second point cloud data on the occupancy grid map based on the location correspondence.

Determine whether the information about the at least one piece of point cloud data is bound to the second location, to obtain a determining result.

If the determining result is yes, obtain a maximum value of the corresponding row coordinate of the at least one piece of point cloud data on the range image.

If a difference between a corresponding row coordinate of the second point cloud data on the range image and the maximum value is less than or equal to a second value, bind the information about the second point cloud data to the second location, and increment a value of a second quantity bound to the second location by one.

If the determining result is no, bind the information about the second point cloud data to the second location, and set the value of the second quantity bound to the second location to an initial value.

For example, to clearly describe this embodiment of this application, it is assumed that a correspondence between pixel coordinates on the range image and coordinates in the occupancy grid is shown in Table 2.

Table 2

| Pixel coordinates | Grid coordinates |
|---|---|
| (1,1) | (3,3) |
| (2,1) | (3,3) |
| (1,2) | (3,3) |
| (2,2) | (5,2) |
| (3,2) | (3,3) |
| (4,2) | (4,1) |
| (5,2) | (5,2) |

Specific steps are as follows:

(1) Traverse each column in the range image. In a second column that is used as an example, it is assumed that there is the first point cloud data projected onto a pixel (1,2) on the range image, the corresponding first location (3,3) of the first point cloud data on the occupancy grid map is obtained.
(2) Determine whether the information about the at least one piece of point cloud data is bound to the first location (3,3). It is assumed that before the second column is traversed, information about (1,1) and (2,1) has been bound to the first location (3,3). In this case, the step in which the determining result is yes is performed. To be specific, a maximum value of row coordinates of all point cloud data bound to the first location (3,3) on the range image is obtained, that is, a maximum value of row coordinates of (1,1) and (2, 1) is obtained, which is 2.
(3) Obtain, through calculation, a difference 1 between a row coordinate 1 of the coordinates (1,2) of the first point cloud data on the range image and the maximum value 2 of the row coordinates. If the second value is greater than or equal to 1, it indicates that the first point cloud data and point cloud data in (1,1) and (2,1) meet the continuous distribution condition in the vertical direction. In this case, the row and column coordinates (1,2) of the first point cloud data are bound to the first location (3,3). In addition, the value of the second quantity is increased by one.
(4) It is assumed that before the second column is traversed, neither (1,1) nor (2,1) in Table 1 corresponds to the first location (3,3) in the occupancy grid. In this case, the step in which the determining result is no is performed. To be specific, the row and column coordinates (1,2) of the first point cloud data on the range image are bound to the first location (3,3), and a value of the second value is set to the initial value.

After the foregoing steps are performed, a set of second quantities of the point cloud data continuously distributed in the vertical direction of the range image in, for example, the grid corresponding to the first location may be calculated. The set of second quantities is also referred to as a vertical continuity feature $C_{row}$, that is, a quantity of continuous laser beams in the vertical direction in a same occupancy grid.

It should be noted that the second value and the second quantity may be specified as required or according to an experiment. This is not limited herein. In addition, the data shown in Table 2 is merely assumed data for ease of description, is merely an example for description, and does not have any association relationship with actual data.

It should be understood that there is no strict limitation on a time sequence and an execution sequence between step 306 and step 307. This is not limited in this application.

308: The vehicle generates, based on the second information and the third information, first information that meets a first condition.

In this embodiment of this application, the first condition indicates a spatial distribution feature of the point cloud data projected onto the range image, and the first information indicates a corresponding spatial distribution feature, on the occupancy grid map, of the point cloud data projected onto the range image. After traversing each row and each column in the range image, the vehicle separately determines the set of first quantities and the set of second quantities of the point cloud data continuously distributed in the horizontal direction and the vertical direction of the range image, and obtains attributes corresponding to a grid on the occupancy grid map, that is, the horizontal continuity feature $C_{col}$ and the vertical continuity feature $C_{row}$.

Optionally, in a possible implementation, the first information further includes a location of center of gravity and a height difference in a Z direction.

In this implementation, for each grid on the occupancy grid map, if a plurality of pieces of point cloud data are bound to the grid, and the horizontal continuity feature $C_{col}$ and the vertical continuity feature $C_{row}$ exist correspondingly, the location of center of gravity and the height difference in the Z direction may be determined based on the plurality of pieces of point cloud data.

For example, it is assumed that a same grid corresponds to coordinates of three pieces of point cloud data. In this case, a corresponding location of center of gravity of the grid includes average values of corresponding X coordinates, Y coordinates, and Z coordinates of the three pieces of point cloud data in the Cartesian coordinate system. In addition, the height difference in the Z direction may be a value that is updated in real time. To be specific, in a process in which the vehicle traverses each row and each column in the range image, for a same grid, with an increase in bound point cloud data, a height difference of newly bound point cloud data in the Z direction is compared with that of the bound point cloud data in the Z direction, to update a maximum height and a minimum height in real time.

It should be noted that, although the created occupancy grid map and the created range image are both two-dimensional images, there is still a corresponding coordinate of the point cloud data in the Z-axis direction. A difference between a maximum value and a minimum value of the plurality of pieces of point cloud data in the Z-axis direction in the same grid, which may also be understood as a difference between a highest point and a lowest point, is calculated, to obtain the height difference of the point cloud data.

It should be noted that the point cloud data is projected onto the range image based on advantages of high searching efficiency and a strong representation capability of the range image and a continuous distribution feature of the surface of the obstacle. This resolves, to some extent, a problem of insufficient feature extraction of the grid based on only information such as the height difference of the point clouds and reflection intensity of laser light. The continuous distribution feature is bound to a corresponding grid, so that an availability dimension of the attribute of the grid is extended. In addition, the continuous distribution feature is essentially related to the feature of the laser light and an occlusion principle of the obstacle, is not dependent on a ground removal algorithm, and is not affected by a ground slope, a target height, and a size. Therefore, a generalization capability is strong.

309: The vehicle generates a convex hull polygon of the to-be-detected obstacle based on the first information.

In this embodiment of this application, after the vehicle traverses each row and each column in the range image and binds the corresponding continuous distribution feature (that is, the first information) to the corresponding grid on the occupancy grid map based on the ranging feature of the lidar and the occlusion feature of the surface of the obstacle, the vehicle may detect the to-be-detected obstacle and generate the convex hull polygon of the to-be-detected obstacle based on the bound first information in the grid, to output a location and a shape of the obstacle.

In a possible implementation, the vehicle may obtain the convex hull polygon of the to-be-detected obstacle by using the following steps, which are specifically as follows:

1. The vehicle traverses each grid on the occupancy grid map, and determines a status of the occupancy grid map based on the first information, to obtain a determining result.
Optionally, the first information includes the first quantity and the second quantity. The value of the first quantity and the value of the second quantity that are bound to the grid may be obtained, and determining is performed based on the value of the first quantity and the value of the second quantity, to obtain the determining result.
2. If the value of the first quantity is greater than or equal to a third value, and the value of the second quantity is greater than or equal to a fourth value, the vehicle determines that the grid is in an occupied state.

Optionally, in addition to performing determining based on the value of the first quantity and the value of the second quantity, determining may be further performed based on the location of center of gravity and the height difference in the Z direction.

It may be understood that, in some scenarios, for example, to avoid detecting an obstacle with a narrow width or a small-size target, a value of the first value may be set to be large. In an actual physical sense, it indicates that a large absolute width is required for the obstacle to be detected.

In addition, it may be understood that, in some scenarios, for example, to avoid detecting a low obstacle or a small-size target, for example, a plastic bag, a value of the second value may be set to be large. In an actual physical sense, it indicates that a large absolute height is required for the obstacle to be detected.

It should be noted that the value of the first quantity and the value of the second quantity respectively indicate thresholds of laser beams that can be determined to be continuously distributed in horizontal and vertical space in a same grid. A threshold setting reference is related to an angle difference between adjacent laser beams. Specifically, a value of the threshold may be determined based on a correspondence between the angle difference between the laser beams and a difference between rows or columns on the range image converted from the point cloud data.

However, it should be noted that, in addition to being set to a fixed threshold, the value of the first quantity, the value of the second quantity, and the height difference in the Z direction may alternatively be dynamically specified based on the location of center of gravity or another parameter. This is not limited herein.

3. Mark the grid.

Specifically, after it is determined, based on an occupancy status of the grid, that the grid is in the occupied state, the grid may be marked as an occupancy value corresponding to the occupied state. For example, the grid in the occupied state is marked as 1, and a remaining grid is marked as 0.

Optionally, before grid are marked, all grids on the occupancy grid map may be marked as 0 by default, or the remaining grid is marked as 0 after the grid in the occupied state is marked. Specifically, an appropriate operating method may be selected according to an actual requirement. This is not limited herein.

4. Cluster all grids marked as the occupied state on the occupancy grid map, to obtain the convex hull polygon of the to-be-detected obstacle.

In this embodiment of this application, it is determined, based on an attribute of a connected domain, whether the grids are a same obstacle, and occupied grids with continuity in grid space are clustered into an obstacle area. Finally, a target obstacle is output in a form of convex hull polygon, to determine a location and a shape of a general obstacle. Specifically, a four-connected algorithm, an eight-connected algorithm, or the like may be used for determining. Further, a contour boundary of the connected domain is extracted as a contour of the obstacle, and finally the location and the shape of the obstacle are represented in the form of convex hull polygon. It can be learned from the foregoing method for calculating coordinates on an occupancy grid map creation phase that, after the obstacle is output in the form of convex hull polygon, a location of a grid corresponding to the obstacle is determined and is multiplied by corresponding resolution, to obtain an actual coordinate location of the obstacle.

Specifically, grids that are marked as 1 on the occupancy grid map is obtained, to determine, according to a principle of the connected domain, whether the grids are the same obstacle. For example, refer to FIG. 7. FIG. 7 is a diagram of obstacle clustering according to this application. An eight-connected area is used as an example for marking. The eight-connected area means upper, lower, left, right, upper left, upper right, lower left, or lower right locations of a corresponding location, which are immediately adjacent and diagonally adjacent locations. There are eight directions in total. All grids whose values are 1 are traversed. If there are other discrete grids whose values are 1 in the area, these grids are classified into one type. As shown in FIG. 7, it is assumed that a dark area is a grid area corresponding to the obstacle, and a light area are grids corresponding to a passable area. It should be understood that, in an actual operation, the grid of the obstacle may be in an irregular polygon shape. A shape of the area shown in FIG. 7 has no actual reference meaning.

It should be noted that, in an actual operation process, the occupied grids may be clustered according to an actual requirement or based on a specific method specified in an experiment. The method for clustering the occupied grids according to the principle of the connected domain in this application is merely an optional implementation. This is not limited herein.

Further, in an optional implementation, after determining related location information of the obstacle based on the output convex hull polygon of the obstacle, the vehicle may output the location information of the obstacle to a related decision and regulation control unit or apparatus, to generate a decision and regulation control strategy of the autonomous driving vehicle, so that safe and stable traveling of the autonomous driving vehicle is ensured.

In this embodiment of this application, compared with an existing conventional technical solution that is performed based on point cloud data clustering, which has a problem of a large calculation amount, the point cloud data is projected onto the range image, which has advantages of a clear neighborhood relationship of the range image, high searching efficiency, and a strong representation capability. This avoids a large amount of labor costs and manpower input and a complex and long iteration period in implementation and application of a data-driving method, breaks limitations that a learning method has a limited detection type and cannot adapt to unknown and special-shaped objects in an autonomous driving scenario. In addition, in this application, according to a principle of the lidar and the occlusion feature of the obstacle, the range image is introduced and a new space continuity feature is extracted as the attribute of the occupied grid, so that an availability dimension of the attribute of the grid is further extended. The feature is not dependent on the ground removal algorithm, and is not affected by the ground slope, the target height, and the size. Therefore, the generalization capability is strong, and a detection capability of the algorithm for a novel target, a special-shaped target, and a low target is further improved.

Based on the embodiments corresponding to FIG. 1 to FIG. 7, to better implement the foregoing solutions in embodiments of this application, the following further provides related devices configured to implement the foregoing solutions.

FIG. 8 is a diagram of a structure of an obstacle detection apparatus according to an embodiment of this application. The obstacle detection apparatus may be used in the autonomous driving vehicle shown in FIG. 1a. The obstacle detection apparatus 8000 includes:

an obtaining module 8001, configured to obtain point cloud data that is of a to-be-detected obstacle and that is collected by a radar, where

for a specific description of the obtaining module 8001, refer to the descriptions of step 301 in the foregoing embodiment, and details are not described herein again; and

a detection module 8002, configured to output a convex hull polygon of the to-be-detected obstacle based on the point cloud data, where the convex hull polygon is obtained based on a spatial distribution feature of the point cloud data projected onto a range image and a location correspondence between the range image and a grid map, and

for a specific description of the detection module 8002, refer to the descriptions of step 302 to step 309 in the foregoing embodiment, and details are not described herein again.

In this embodiment of this application, in a first aspect, the disordered point cloud data is projected onto the range image with a clear neighborhood relationship, to complete feature extraction of the obstacle, so that point cloud data processing efficiency can be improved. In a second aspect, a feature of the point cloud data on the range image is extracted based on the spatial distribution feature of the point cloud data projected onto the range image, so that a problem of currently insufficient feature extraction is resolved. In a third aspect, a laser beam transmitted by a lidar enables the point cloud data to generate continuity in a horizontal direction and a vertical direction on a surface of the obstacle. After the point cloud data is projected onto the range image, continuity features generated in the horizontal direction and the vertical direction on the surface of the obstacle are extracted based on an occlusion feature of the obstacle on the range image with the clear neighborhood relationship, to determine an attribute of an occupancy grid based on the continuity features, so that the obstacle is further detected, and a capability of an algorithm for detecting a general target is improved.

Optionally, in a possible implementation, the detection module 8002 is specifically configured to:

project the point cloud data onto the range image and the occupancy grid map separately, to obtain a location correspondence between the point cloud data on the range image and the point cloud data on the occupancy grid map;

determine, based on the location correspondence, first information that meets a first condition, where the first condition indicates the spatial distribution feature of the point cloud data projected onto the range image, and the first information indicates a corresponding spatial distribution feature, on the occupancy grid map, of the point cloud data projected onto the range image; and

generate the convex hull polygon of the to-be-detected obstacle based on the first information.

Optionally, in a possible implementation, the first condition includes continuous distribution conditions, respectively in a horizontal direction and a vertical direction, of the range image of the point cloud data projected onto the range image, and determining, from the range image based on the location correspondence, the first information that meets the first condition includes:

traversing each row in the range image, and determining, based on the location correspondence, second information that meets the continuous distribution condition in the horizontal direction;

traversing each column in the range image, and determining, based on the location correspondence, third information that meets the continuous distribution condition in the vertical direction; and

generating the first information based on the second information and the third information.

Optionally, in a possible implementation, the second information includes a set of first quantities of the point cloud data continuously distributed in the horizontal direction of the range image, and the traversing each row in the range image, and determining, based on the location correspondence, second information that meets the continuous distribution condition in the horizontal direction includes:

for each pixel in each row in the range image, if there is first point cloud data projected onto the pixel, obtaining a first location of the first point cloud data on the occupancy grid map based on the location correspondence;

determining whether information about at least one piece of point cloud data is bound to the first location, to obtain a determining result, where the information includes corresponding row and column coordinates that are of the at least one piece of point cloud data and that are on the range image;

if the determining result is yes, obtaining a maximum value of the corresponding column coordinate of the at least one piece of point cloud data on the range image;

if a difference between a corresponding column coordinate of the first point cloud data on the range image and the maximum value is less than or equal to a first value, binding the information about the first point cloud data to the first location, and incrementing a value of the first quantity bound to the first location by one; and

if the determining result is no, binding the information about the first point cloud data to the first location, and setting the value of the first quantity bound to the first location to an initial value.

Optionally, in a possible implementation, the third information includes a set of second quantities of the point cloud data continuously distributed in the vertical direction of the range image, and the traversing each column in the range image, and determining, based on the location correspondence, third information that meets the continuous distribution condition in the vertical direction includes:

for each pixel in each column in the range image, if there is second point cloud data projected onto the pixel, obtaining a second location of the second point cloud data on the occupancy grid map based on the location correspondence;

determining whether the information about the at least one piece of point cloud data is bound to the second location, to obtain a determining result;

if the determining result is yes, obtaining a maximum value of the corresponding row coordinate of the at least one piece of point cloud data on the range image;

if a difference between a corresponding row coordinate of the second point cloud data on the range image and the maximum value is less than or equal to a second value, binding the information about the second point cloud data to the second location, and incrementing a value of a second quantity bound to the second location by one; and

if the determining result is no, binding the information about the second point cloud data to the second location, and setting the value of the second quantity bound to the second location to an initial value.

Optionally, in a possible implementation, generating the convex hull polygon of the to-be-detected obstacle based on the first information includes:

determining a status of each grid on the occupancy grid map based on the first information, to obtain a determining result; and

clustering at least one grid on the occupancy grid map based on the determining result, to obtain the convex hull polygon of the to-be-detected obstacle.

Optionally, in a possible implementation, the determining a status of the occupancy grid map based on the first information, to obtain a determining result includes:

for each grid on the occupancy grid map, obtaining the value of the first quantity and the value of the second quantity that are bound to the grid, where the first quantity is a quantity of at least one piece of point cloud data that is bound to the grid and that is continuously distributed in the horizontal direction of the range image, and the second quantity is a quantity of at least one piece of point cloud data that is bound to the grid and that is continuously distributed in the vertical direction of the range image; and
if the value of the first quantity is greater than or equal to a third value, and the value of the second quantity is greater than or equal to a fourth value, determining that the grid is in an occupied state.

Optionally, in a possible implementation, the clustering at least one grid on the occupancy grid map based on the determining result, to obtain the convex hull polygon of the to-be-detected obstacle includes:

for each grid on the occupancy grid map, if the grid is in the occupied state, marking the grid; and

clustering all grids marked as the occupied state on the occupancy grid map, to obtain the convex hull polygon of the to-be-detected obstacle.

Optionally, in a possible implementation, before projecting a first location set of the point cloud data onto the occupancy grid map, the method further includes:
performing division on the point cloud data in a non-uniform grid division manner, to generate the occupancy grid map.

It should be noted that operations performed by units in the obstacle detection apparatus 8000 are similar to those described in the method embodiment shown in FIG. 3, and may be used to implement functions of the intelligent driving device in the foregoing method embodiment, and may also implement beneficial effects of the foregoing method embodiment. Details are not described herein again.

FIG. 9 is a diagram of another structure of an obstacle detection apparatus according to an embodiment of this application. As shown in FIG. 9, an obstacle detection apparatus 9000 is implemented by using a general bus architecture.

The obstacle detection apparatus 9000 includes at least one processor 9001, a communication bus 9002, a memory 9003, and at least one communication interface 9004.

The processor 9001, the memory 9003, and the communication interface 9004 communicate with each other through the communication bus 9002, or may implement communication through wireless transmission and the like. The memory 9003 is configured to store instructions, and the processor 9001 is configured to execute the instructions stored in the memory 9003. The memory 9003 stores program code, and the processor 9001 may invoke the program code stored in the memory 9003 to perform step S1 and step S2 in the embodiment shown in FIG. 1b. For specific implementation, refer to the specific descriptions of step 301 to step 309 in the embodiment shown in FIG. 3. Details are not described herein again.

Optionally, the processor 9001 is a general-purpose central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device (programmable logic device, PLD), a transistor logic device, a hardware component, or any combination thereof. The PLD is a complex programmable logic device (complex programmable logic device, CPLD), a field-programmable gate array (field-programmable gate array, FPGA), generic array logic (generic array logic, GAL), or any combination thereof.

The communication bus 9002 is configured to transmit information between the processor 9001, the memory 9003, and the communication interface 9004. The communication bus 9002 is classified into an address bus, a data bus, a control bus, and the like. For ease of indication, the bus is indicated by using only one line in the figure. However, it does not indicate that there is only one bus or only one type of bus.

Optionally, the memory 9003 is a read-only memory (read-only memory, ROM) or another type of static storage device that can store static information and instructions. Alternatively, the memory 9003 is a random access memory (random access memory, RAM) or another type of dynamic storage device that can store information and instructions. Alternatively, the memory 9003 is an electrically erasable programmable read-only memory (electrically erasable programmable read-only Memory, EEPROM), a compact disc read-only memory (compact disc read-only memory, CD-ROM) or another optical disc storage, an optical disc storage (including a compact optical disc, a laser disc, an optical disc, a digital versatile disc, a blue-ray optical disc, or the like), a magnetic disk storage medium or another magnetic storage device, or any other computer-accessible medium that can be configured to carry or store expected program code in a form of instruction or data structure, but is not limited thereto. Optionally, the memory 9003 exists independently, and is connected to the processor 9001 through the communication bus 9002. Optionally, the memory 9003 is integrated with the processor 9001.

The communication interface 9004 uses any apparatus such as a transceiver, and is configured to communicate with another device or a communication network. The communication interface 9004 includes a wired communication interface. Optionally, the communication interface 9004 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 9001 includes one or more CPUs, for example, a CPU 0 and a CPU 1 shown in FIG. 9.

During specific implementation, in an embodiment, the obstacle detection apparatus 9000 includes a plurality of processors, for example, the processor 9001 and a processor 9005 shown in FIG. 9. Each of the processors is a single-core (single-CPU) processor or a multi-core (multi-CPU) processor. The processor herein is one or more devices, circuits, and/or processing cores configured to process data (for example, computer program instructions).

In some embodiments, the memory 9003 is configured to store program code for executing the solutions of this application, and the processor 9001 executes the program code stored in the memory 9003. In other words, the obstacle detection apparatus 9000 implements the foregoing embodiment of the obstacle detection method by using the processor 9001 and the program code in the memory 9003.

It may be understood that the method steps in embodiments of this application may be implemented in hardware, or may be implemented in software instructions that may be executed by the processor 9001. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. In addition, a scope of the apparatus described in this application is not limited thereto, and a structure of the apparatus may not be limited to that in FIG. 9. The apparatus may be an independent device, or may be a part of a large device. For example, the apparatus may be:

(1) an independent integrated circuit IC, a chip, or a chip system or subsystem;
(2) a set including one or more ICs, where optionally, the IC set may further include a storage component configured to store data and/or instructions;
(3) a module that can be embedded in another device;
(4) a receiver, a terminal, an intelligent terminal, a wireless device, a handset, a mobile unit, a vehicle-mounted device, an artificial intelligence device, a machine device, a home device, a medical device, an industrial device, or the like; or
(5) another device or the like.

It may be clearly understood by a person skilled in the art that, for the purpose of convenient and brief description, for a detailed working process of the foregoing apparatus, reference may be made to a corresponding process in the foregoing method embodiments. Details are not described herein again.

An embodiment of this application further provides an intelligent driving device. FIG. 10 is a diagram of a structure of an intelligent driving device according to an embodiment of this application. The intelligent driving device may include an autonomous driving vehicle. With reference to the foregoing descriptions of FIG. 1a, the following describes the structure of the intelligent driving device by using the autonomous driving vehicle as an example. The obstacle detection apparatus 8000 described in the embodiment corresponding to FIG. 8 or the obstacle detection apparatus 9000 described in the embodiment corresponding to FIG. 9 may be deployed on the intelligent driving device 1000. In some embodiments, the intelligent driving device 1000 may further have a communication function. Therefore, in addition to the components shown in FIG. 1a, the intelligent driving device 1000 may further include a receiver 1001 and a transmitter 1002. A processor 1003 may include an application processor 10031 and a communication processor 10032. In some embodiments of this application, the receiver 1001, the transmitter 1002, the processor 1003, and a memory 1004 may be connected through a bus or in another manner.

The processor 1003 controls an operation of the autonomous driving vehicle. During specific application, components of the intelligent driving device 1000 are coupled together through a bus system. In addition to a data bus, the bus system may further include a power bus, a control bus, a status signal bus, and the like. However, for clear description, various types of buses in the figure are referred to as the bus system.

The receiver 1001 may be configured to: receive input digital or character information, and generate signal input related to related settings and function control of the autonomous driving vehicle. The transmitter 1002 may be configured to output the digital or character information through a first interface. The transmitter 1002 may be configured to send instructions to a disk group through the first interface, to modify data in the disk group. The transmitter 1002 may further include a display device such as a display.

In this embodiment of this application, the application processor 10031 is configured to perform any one of the foregoing method embodiments. It should be noted that, for a specific implementation and beneficial effects of performing the obstacle detection method by the application processor 10031, refer to the descriptions in any one of the foregoing method embodiments. Details are not described herein again.

An embodiment of this application further provides a computer-readable storage medium. The computer-readable storage medium stores a program used for signal processing. When the program is run on a computer, the computer is enabled to perform the steps performed by the vehicle in the methods described in embodiments shown in FIG. 1b to FIG. 7.

An embodiment of this application further provides a computer program product. When the computer product is executed by a computer, functions of any one of the foregoing method embodiments are implemented.

An embodiment of this application further provides a circuit system. The circuit system includes a processing circuit. The processing circuit is configured to perform any one of the foregoing method embodiments.

The autonomous driving vehicle provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs any one of the foregoing method embodiments. Optionally, the storage unit is a storage unit in the chip, for example, a register or a cache. The storage unit may alternatively be a storage unit that is in a wireless access device and that is outside the chip, for example, a read-only memory, another type of static storage device that can store static information and instructions, or a random access memory. The processor mentioned above may be a general-purpose central processing unit, a microprocessor, an ASIC, or one or more integrated circuits that are configured to control program execution of the method according to the first aspect.

It may be understood that, the system, apparatus, and method described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Embodiments in this specification are described in a progressive manner. For same or similar parts in embodiments, refer to these embodiments. Each embodiment focuses on a difference from other embodiments.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the units in this application is logical division. During actual application, there may be other division. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate components may or may not be physically separate, may or may not be physical units, or may be distributed into a plurality of circuit units. Some or all of the units may be selected according to an actual requirement to implement the objectives of the solutions of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but are not used to limit the scope of embodiments of this application. Sequence numbers of the foregoing processes do not mean an execution sequence, and the execution sequence of the processes should be determined based on functions and internal logic of the processes.

The foregoing embodiments are merely intended to describe the technical solutions of this application, but are not intended to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. An obstacle detection method, wherein the method is applied to an intelligent driving device, and the method comprises:

obtaining point cloud data that is of a to-be-detected obstacle and that is collected by a radar; and

outputting a convex hull polygon of the to-be-detected obstacle based on the point cloud data, wherein the convex hull polygon is obtained based on a spatial distribution feature of the point cloud data projected onto a range image and a location correspondence between the range image and an occupancy grid map.

2. The method according to claim 1, wherein the outputting a convex hull polygon of the to-be-detected obstacle based on the point cloud data comprises:

projecting the point cloud data onto the range image and the occupancy grid map separately, to obtain a location correspondence between the point cloud data on the range image and the point cloud data on the occupancy grid map;

determining, based on the location correspondence, first information that meets a first condition, wherein the first condition indicates the spatial distribution feature of the point cloud data projected onto the range image, and the first information indicates a corresponding spatial distribution feature, on the occupancy grid map, of the point cloud data projected onto the range image; and

generating the convex hull polygon of the to-be-detected obstacle based on the first information.

3. The method according to claim 2, wherein the first condition comprises continuous distribution conditions, respectively in a horizontal direction and a vertical direction of the range image, of the point cloud data projected onto the range image, and the determining, from the range image based on the location correspondence, first information that meets a first condition comprises:

traversing each row in the range image, and determining, based on the location correspondence, second information that meets the continuous distribution condition in the horizontal direction;

traversing each column in the range image, and determining, based on the location correspondence, third information that meets the continuous distribution condition in the vertical direction; and

generating the first information based on the second information and the third information.

4. The method according to claim 3, wherein the second information comprises a set of first quantities of the point cloud data continuously distributed in the horizontal direction of the range image, and the traversing each row in the range image, and determining, based on the location correspondence, second information that meets the continuous distribution condition in the horizontal direction comprises:

for each pixel in each row in the range image, if there is first point cloud data projected onto the pixel, obtaining a first location of the first point cloud data on the occupancy grid map based on the location correspondence;

determining whether information about at least one piece of point cloud data is bound to the first location, to obtain a determining result, wherein the information comprises corresponding row and column coordinates that are of the at least one piece of point cloud data and that are on the range image;

if the determining result is yes, obtaining a maximum value of the corresponding column coordinate of the at least one piece of point cloud data on the range image;

if a difference between a corresponding column coordinate of the first point cloud data on the range image and the maximum value is less than or equal to a first value, binding the information about the first point cloud data to the first location, and incrementing a value of the first quantity bound to the first location by one; and

if the determining result is no, binding the information about the first point cloud data to the first location, and setting the value of the first quantity bound to the first location to an initial value.

5. The method according to claim 4, wherein the third information comprises a set of second quantities of the point cloud data continuously distributed in the vertical direction of the range image, and the traversing each column in the range image, and determining, based on the location correspondence, third information that meets the continuous distribution condition in the vertical direction comprises:

for each pixel in each column in the range image, if there is second point cloud data projected onto the pixel, obtaining a second location of the second point cloud data on the occupancy grid map based on the location correspondence;

determining whether the information about the at least one piece of point cloud data is bound to the second location, to obtain a determining result;

if the determining result is yes, obtaining a maximum value of the corresponding row coordinate of the at least one piece of point cloud data on the range image;

if a difference between a corresponding row coordinate of the second point cloud data on the range image and the maximum value is less than or equal to a second value, binding the information about the second point cloud data to the second location, and incrementing a value of the second quantity bound to the second location by one; and

if the determining result is no, binding the information about the second point cloud data to the second location, and setting the value of the second quantity bound to the second location to an initial value.

**6.** The method according to any one of claims 2 to 5, wherein the generating the convex hull polygon of the to-be-detected obstacle based on the first information comprises:

determining a status of each grid on the occupancy grid map based on the first information, to obtain a determining result; and

clustering at least one grid on the occupancy grid map based on the determining result, to obtain the convex hull polygon of the to-be-detected obstacle.

**7.** The method according to claim 6, wherein the determining a status of the occupancy grid map based on the first information, to obtain a determining result comprises:

for each grid on the occupancy grid map, obtaining a value of the first quantity and a value of the second quantity that are bound to the grid, wherein the first quantity is a quantity of at least one piece of point cloud data that is bound to the grid and that is continuously distributed in the horizontal direction of the range image, and the second quantity is a quantity of at least one piece of point cloud data that is bound to the grid and that is continuously distributed in the vertical direction of the range image; and

if the value of the first quantity is greater than or equal to a third value, and the value of the second quantity is greater than or equal to a fourth value, determining that the grid is in an occupied state.

**8.** An obstacle detection apparatus, wherein the apparatus is used in an intelligent driving device, and the apparatus comprises:

an obtaining module, configured to obtain point cloud data that is of a to-be-detected obstacle and that is collected by a radar; and

a detection module, configured to output a convex hull polygon of the to-be-detected obstacle based on the point cloud data, wherein the convex hull polygon is obtained based on a spatial distribution feature of the point cloud data projected onto a range image and a location correspondence between the range image and a grid map.

**9.** The apparatus according to claim 8, wherein the detection module is specifically configured to:

project the point cloud data onto the range image and the occupancy grid map separately, to obtain a location correspondence between the point cloud data on the range image and the point cloud data on the occupancy grid map;

determine, based on the location correspondence, first information that meets a first condition, wherein the first condition indicates the spatial distribution feature of the point cloud data projected onto the range image, and the first information indicates a corresponding spatial distribution feature, on the occupancy grid map, of the point cloud data projected onto the range image; and

generate the convex hull polygon of the to-be-detected obstacle based on the first information.

**10.** An intelligent driving device, comprising a processor and a memory, wherein the processor is coupled to the memory;

the memory is configured to store a program; and

the processor is configured to execute the program in the memory, so that the vehicle performs the method according to any one of claims 1 to 7.

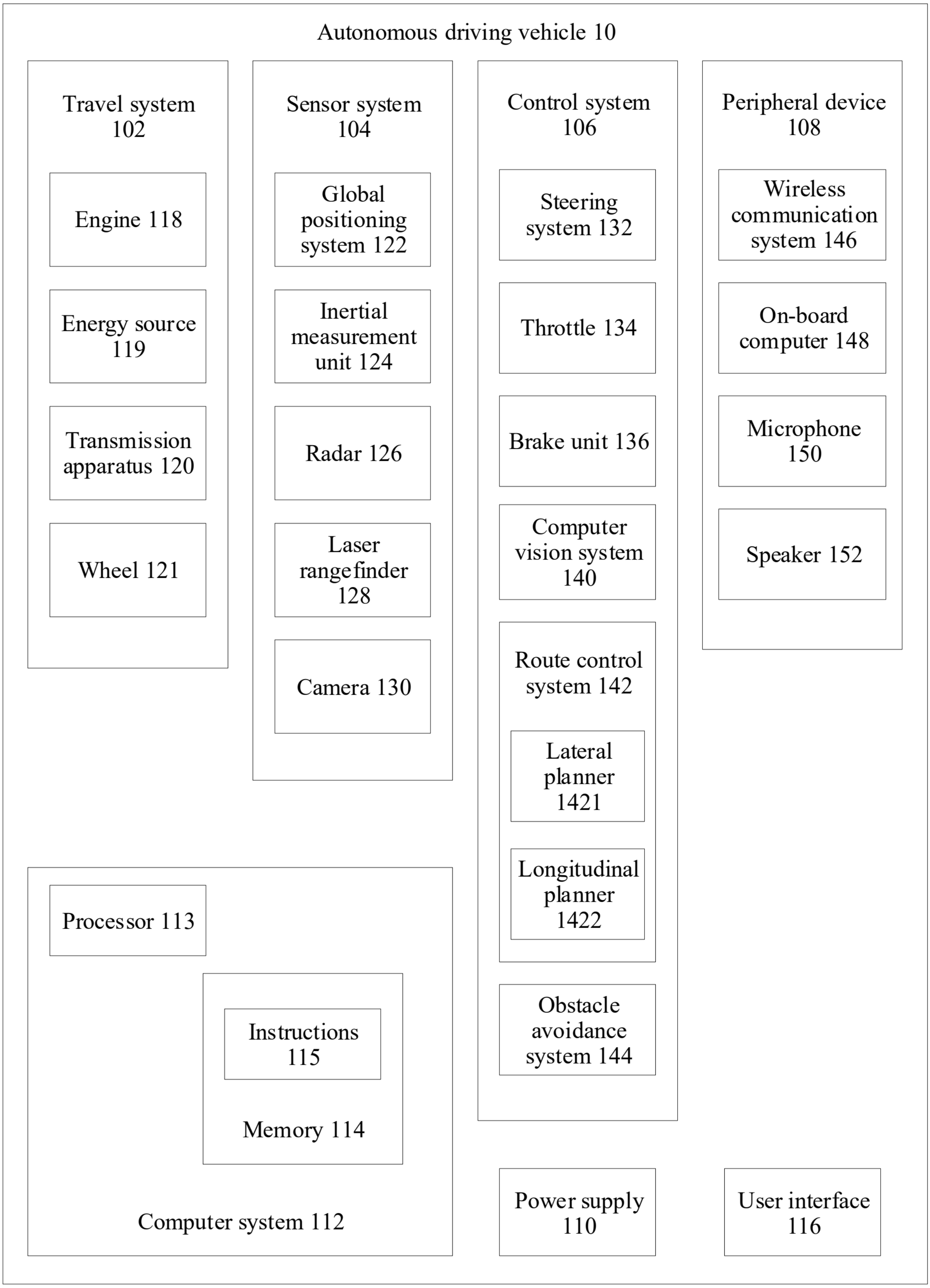
Autonomous driving vehicle 10
Travel system 102
Engine 118
Energy source 119
Transmission apparatus 120
Wheel 121
Sensor system 104
Global positioning system 122
Inertial measurement unit 124
Radar 126
Laser rangefinder 128
Camera 130
Control system 106
Steering system 132
Throttle 134
Brake unit 136
Computer vision system 140
Route control system 142
Lateral planner 1421
Longitudinal planner 1422
Obstacle avoidance system 144
Peripheral device 108
Wireless communication system 146
On-board computer 148
Microphone 150
Speaker 152
Processor 113
Instructions 115
Memory 114
Computer system 112
Power supply 110
User interface 116

FIG. 1a

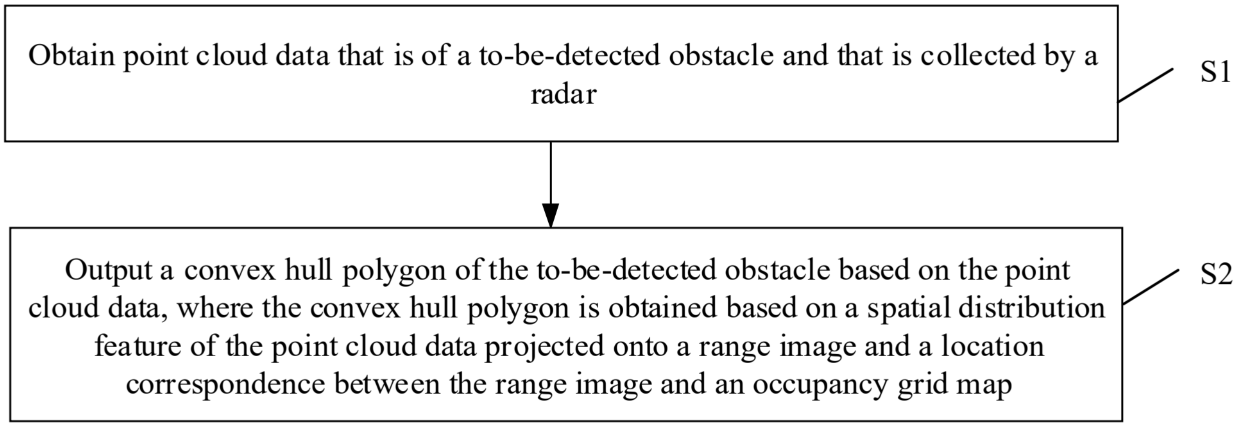
Obtain point cloud data that is of a to-be-detected obstacle and that is collected by a radar
S1
Output a convex hull polygon of the to-be-detected obstacle based on the point cloud data, where the convex hull polygon is obtained based on a spatial distribution feature of the point cloud data projected onto a range image and a location correspondence between the range image and an occupancy grid map
S2

FIG. 1b

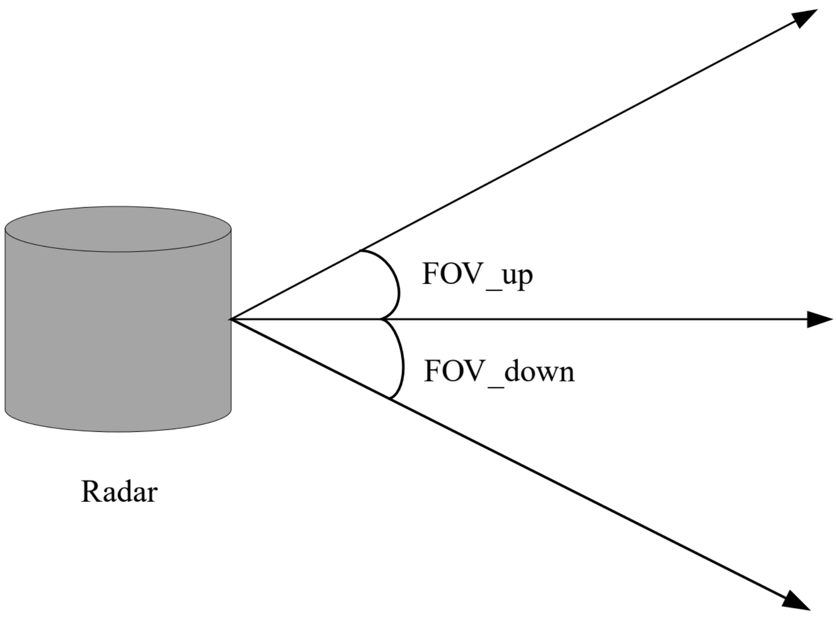
FOV_up
FOV_down
Radar

FIG. 2

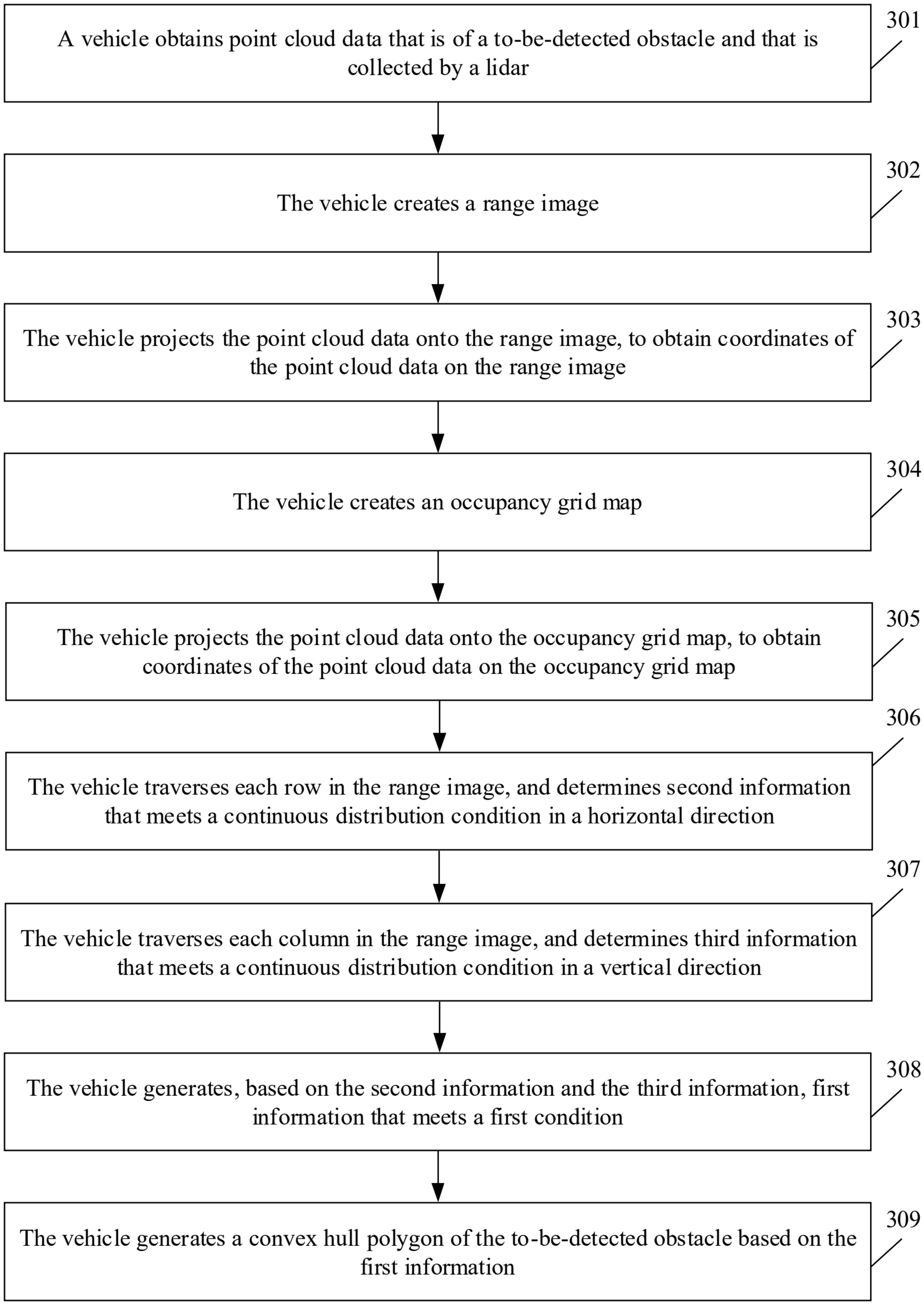
A vehicle obtains point cloud data that is of a to-be-detected obstacle and that is collected by a lidar
301
The vehicle creates a range image
302
The vehicle projects the point cloud data onto the range image, to obtain coordinates of the point cloud data on the range image
303
The vehicle creates an occupancy grid map
304
The vehicle projects the point cloud data onto the occupancy grid map, to obtain coordinates of the point cloud data on the occupancy grid map
305
The vehicle traverses each row in the range image, and determines second information that meets a continuous distribution condition in a horizontal direction
306
The vehicle traverses each column in the range image, and determines third information that meets a continuous distribution condition in a vertical direction
307
The vehicle generates, based on the second information and the third information, first information that meets a first condition
308
The vehicle generates a convex hull polygon of the to-be-detected obstacle based on the first information
309

FIG. 3

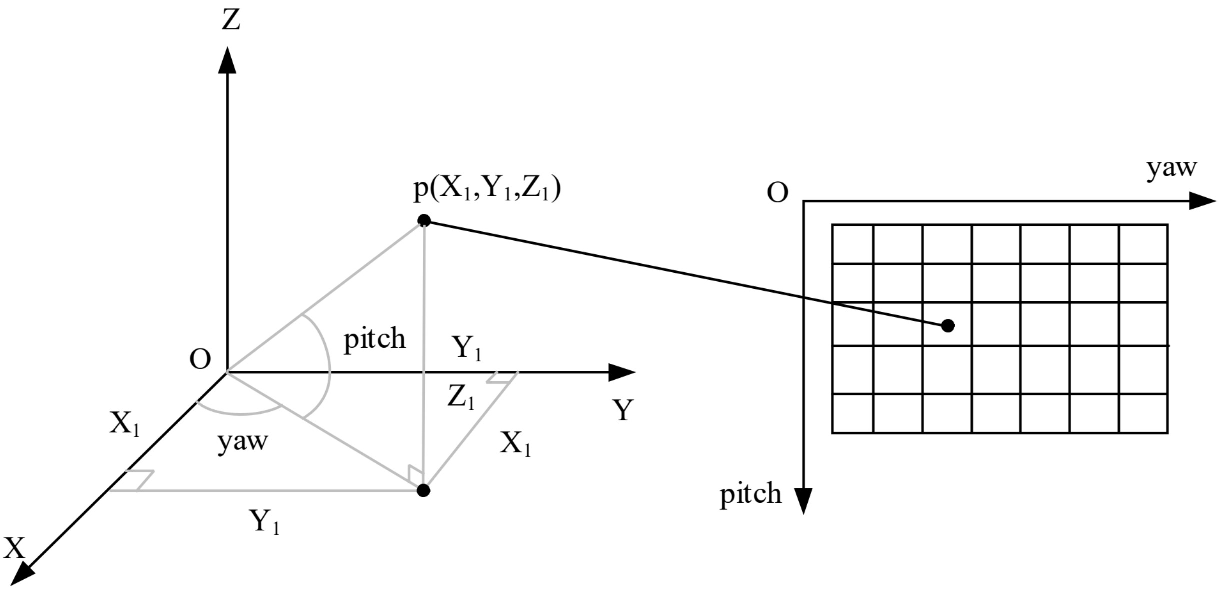
Z
p(X1,Y1,Z1)
O
pitch
Y1
Z1
Y
X1
yaw
X1
Y1
X
O
yaw
pitch

FIG. 4

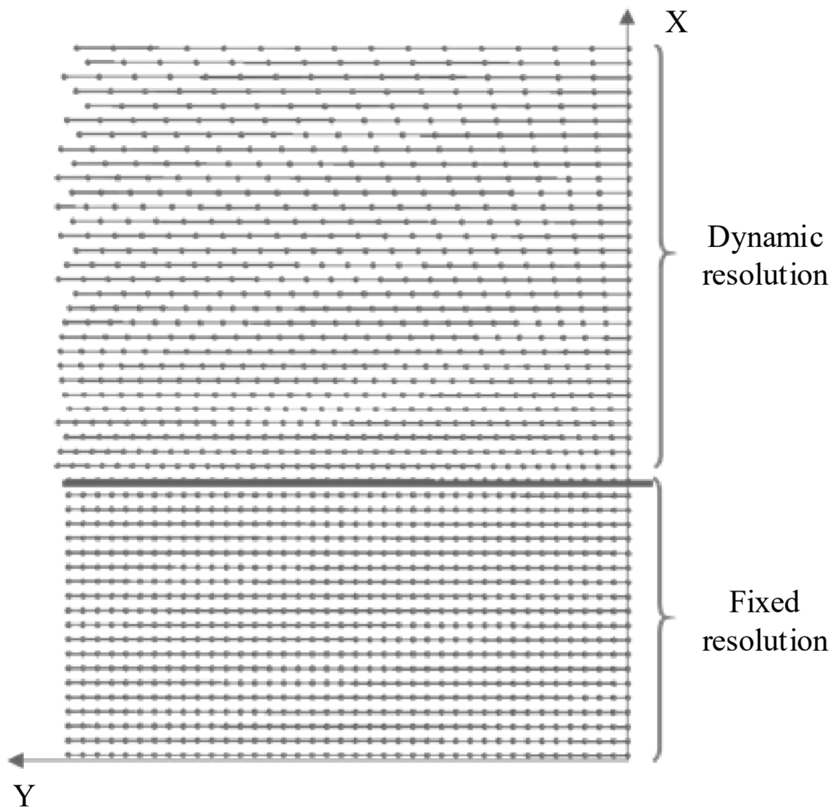
X
Dynamic resolution
Fixed resolution
Y

FIG. 5

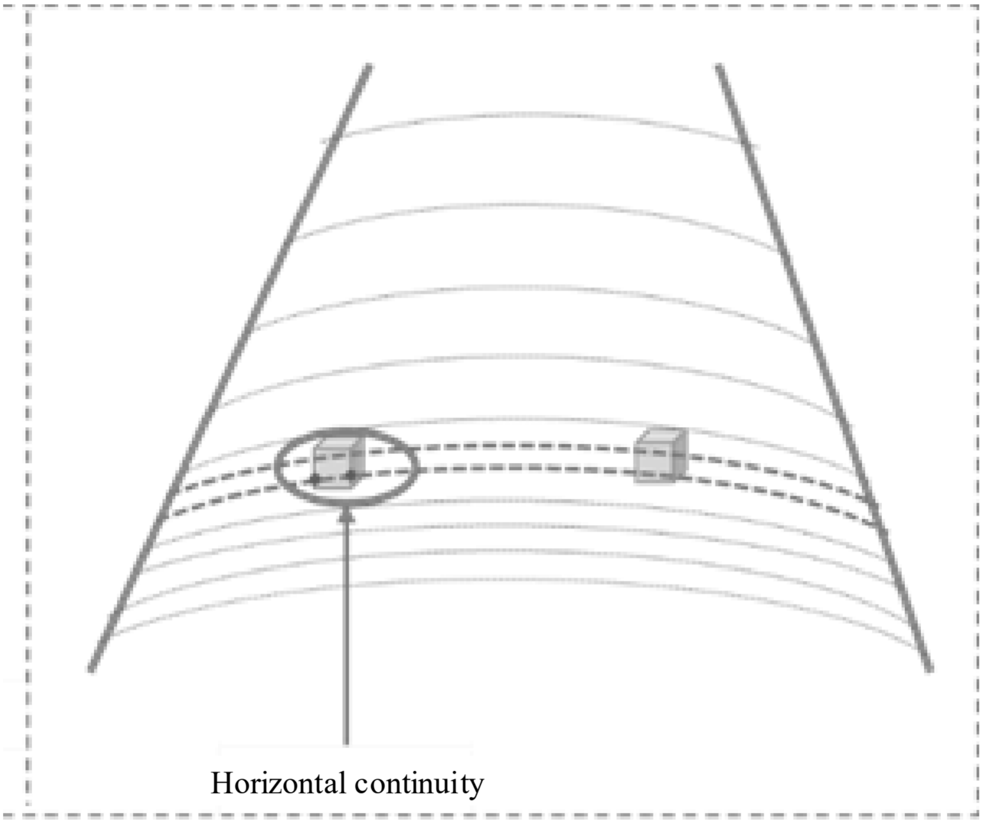
Horizontal continuity

FIG. 6a

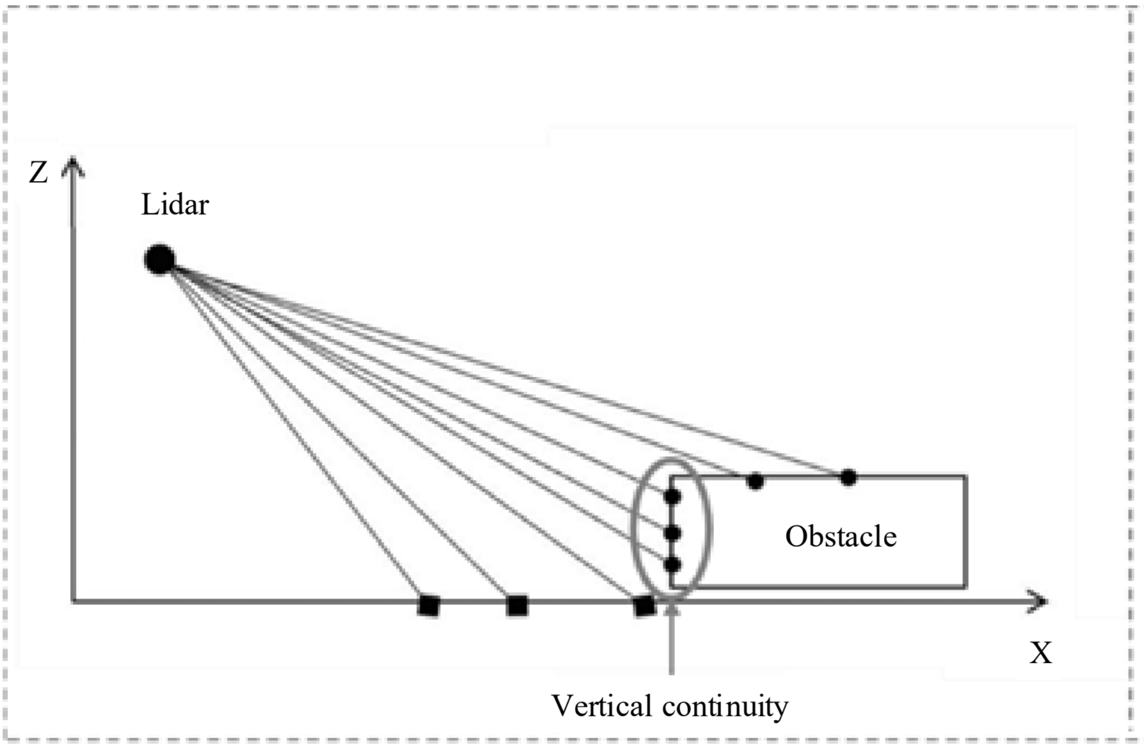
Z
Lidar
Obstacle
X
Vertical continuity

FIG. 6b

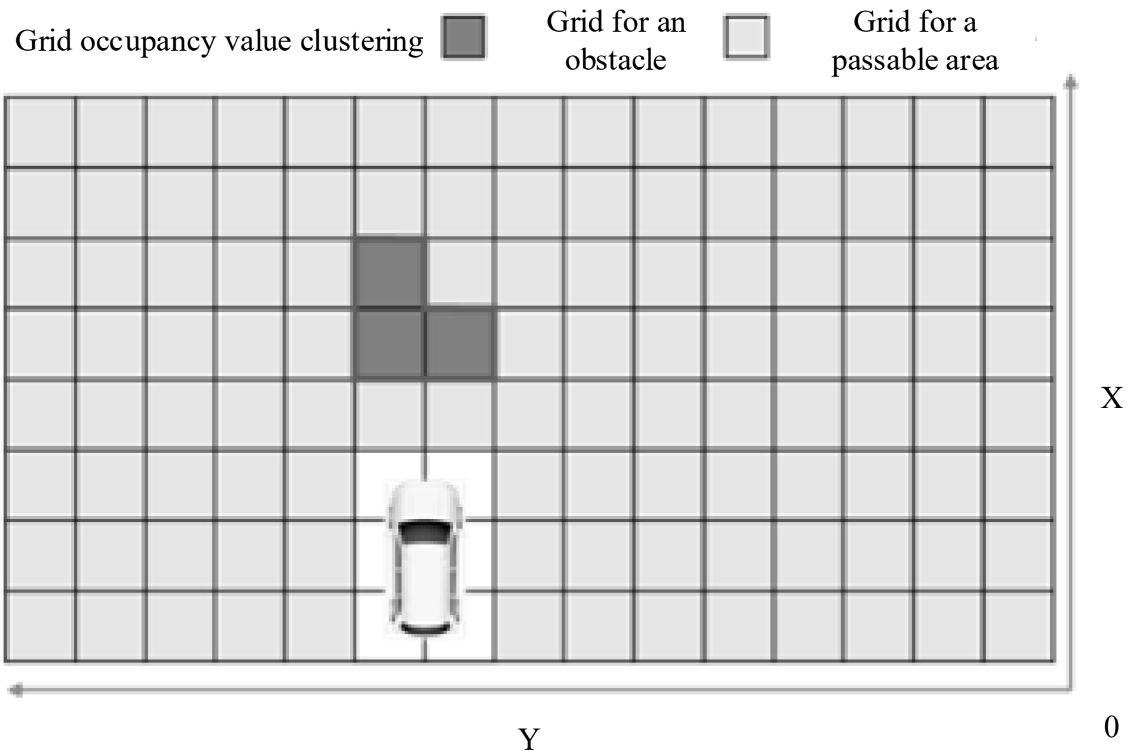
Grid occupancy value clustering
Grid for an obstacle
Grid for a passable area
X
Y
0

FIG. 7

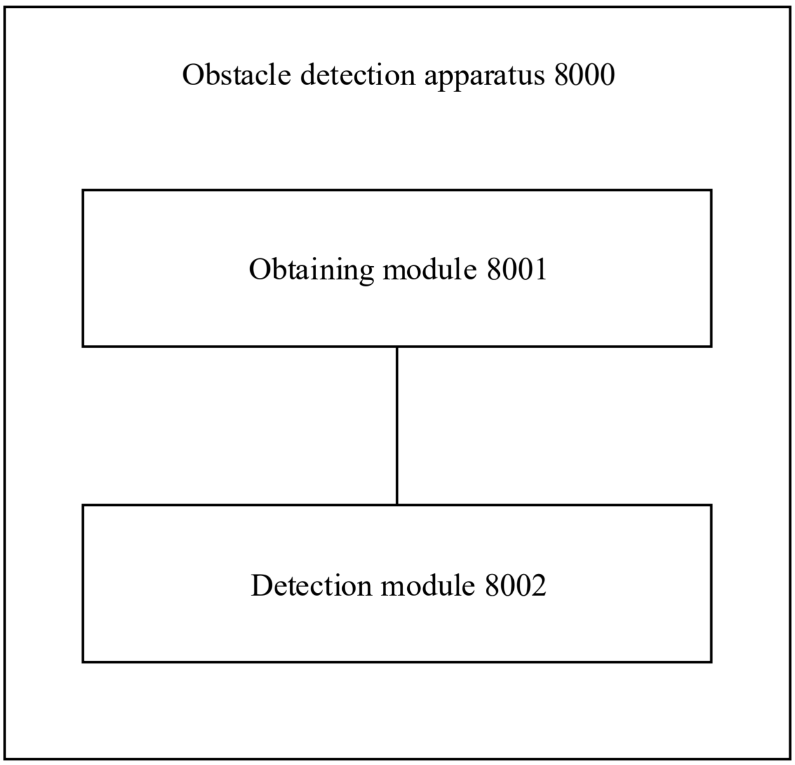
Obstacle detection apparatus 8000
Obtaining module 8001
Detection module 8002

FIG. 8

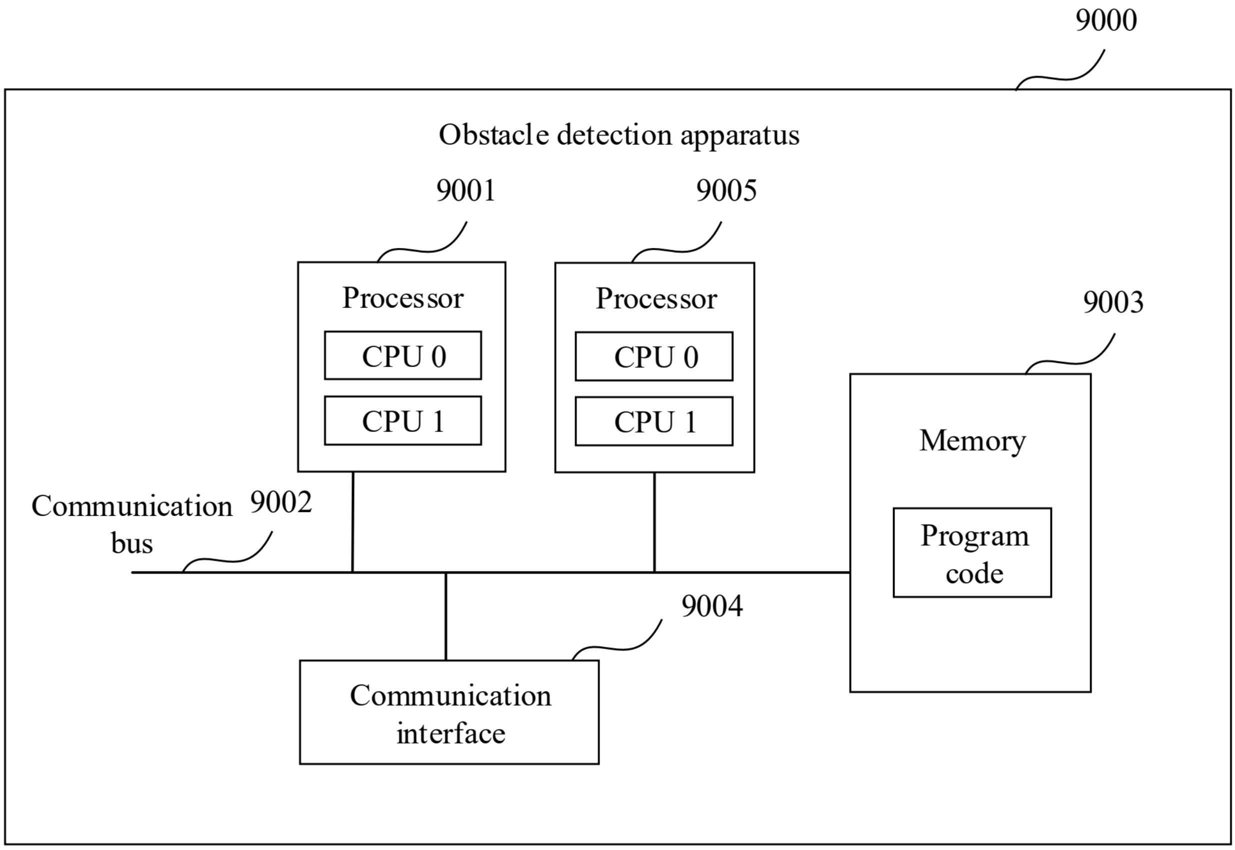
9000
Obstacle detection apparatus
9001
9005
Processor
CPU 0
CPU 1
Processor
CPU 0
CPU 1
9003
Memory
Program code
Communication bus
9002
9004
Communication interface

FIG. 9

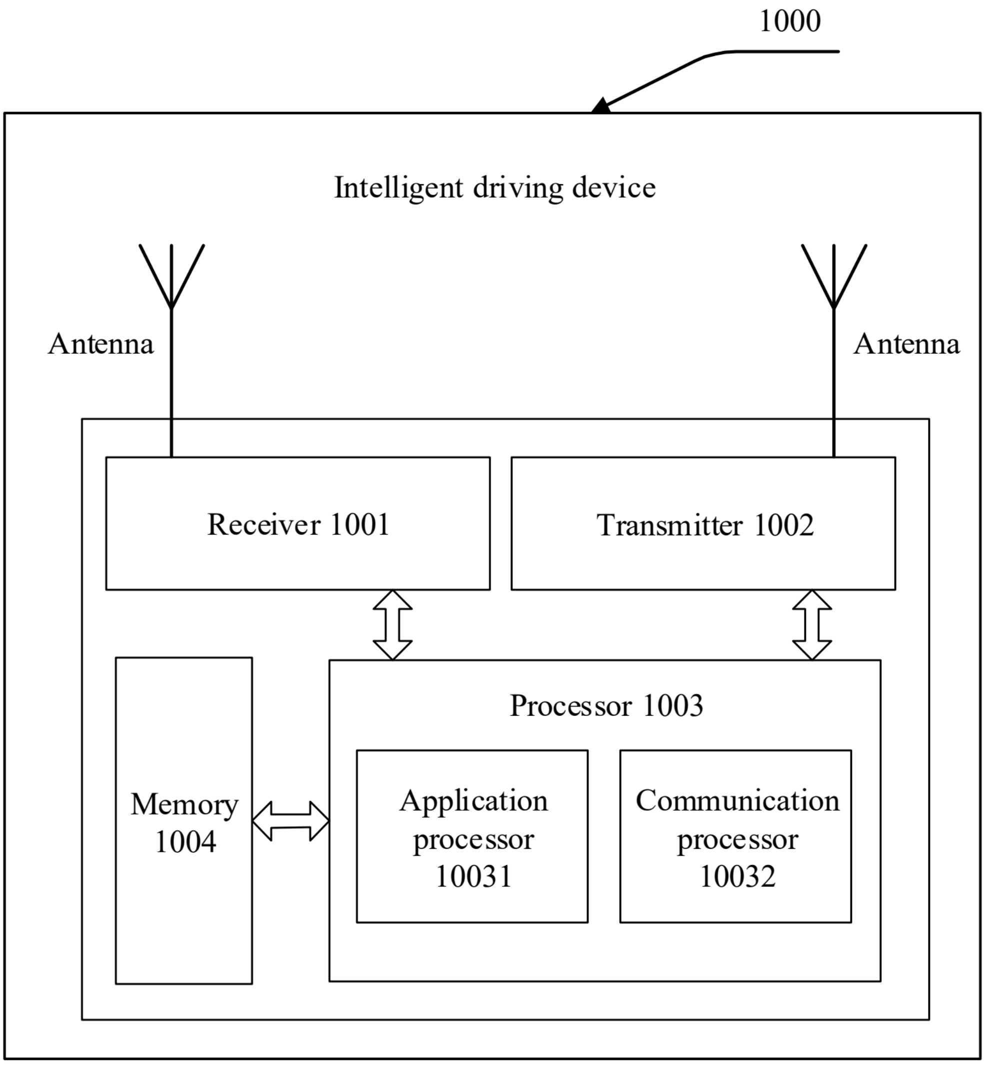
1000
Intelligent driving device
Antenna
Antenna
Receiver 1001
Transmitter 1002
Processor 1003
Memory 1004
Application processor 10031
Communication processor 10032

FIG. 10

## INTERNATIONAL SEARCH REPORT

International application No. **PCT/CN2022/143281**

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC:G06T,G01C,G01S

Documentation searched other than minimum documentation to the extent that such documents are included in the fields searched

Electronic data base consulted during the international search (name of data base and, where practicable, search terms used)

CNTXT, CNKI, DWPI, WPABS: 障碍, 避障, 点云, 深度, 距离, 图像, 形状, 栅格, 地图, 投影, obstacle, obstruct+, point+, cloud?, deep+, depth, distance, image?, figure, grid+, map+, project+

**C. DOCUMENTS CONSIDERED TO BE RELEVANT**

| Category* | Citation of document, with indication, where appropriate, of the relevant passages | Relevant to claim No. |
|---|---|---|
| X | CN 114219871 A (HANGZHOU HIKROBOT TECHNOLOGY CO., LTD.) 22 March 2022 (2022-03-22)<br>description, paragraphs [0185]-[0200], and figures 1-7 | 1, 8, 10 |
| A | CN 108549089 A (SHENZHEN ACADEMY OF ROBOTICS) 18 September 2018 (2018-09-18)<br>entire document | 1-10 |
| A | CN 110278714 A (SZ DJI TECHNOLOGY CO., LTD.) 24 September 2019 (2019-09-24)<br>entire document | 1-10 |
| A | CN 110893617 A (UBTECH ROBOTICS CORP.) 20 March 2020 (2020-03-20)<br>entire document | 1-10 |
| A | CN 111860321 A (ZHEJIANG GENIUS PROS INTELLIGENT TECHNOLOGY CO., LTD.) 30 October 2020 (2020-10-30)<br>entire document | 1-10 |
| A | CN 114255252 A (NEOLIX HUITONG (BEIJING) TECHNOLOGY CO., LTD.) 29 March 2022 (2022-03-29)<br>entire document | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 August 2023** | **23 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2022/143281**

**C. DOCUMENTS CONSIDERED TO BE RELEVANT**

| Category* | Citation of document, with indication, where appropriate, of the relevant passages | Relevant to claim No. |
|---|---|---|
| A | CN 114266960 A (STATE GRID INTELLIGENCE TECHNOLOGY CO., LTD.) 01 April 2022 (2022-04-01)<br>entire document | 1-10 |
| A | CN 115236696 A (HAOMO AI TECHNOLOGY CO., LTD.) 25 October 2022 (2022-10-25)<br>entire document | 1-10 |
| A | US 2021063578 A1 (NVIDIA CORP.) 04 March 2021 (2021-03-04)<br>entire document | 1-10 |

Form PCT/ISA/210 (second sheet) (July 2022)

**INTERNATIONAL SEARCH REPORT**
**Information on patent family members**

International application No.
**PCT/CN2022/143281**

| Patent document cited in search report | Publication date (day/month/year) | Patent family member(s) | Publication date (day/month/year) |
|---|---|---|---|
| CN 114219871 A | 22 March 2022 | None | |
| CN 108549089 A | 18 September 2018 | None | |
| CN 110278714 A | 24 September 2019 | WO 2019144286 A1 | 01 August 2019 |
| | | US 2020349727 A1 | 05 November 2020 |
| CN 110893617 A | 20 March 2020 | None | |
| CN 111860321 A | 30 October 2020 | None | |
| CN 114255252 A | 29 March 2022 | None | |
| CN 114266960 A | 01 April 2022 | None | |
| CN 115236696 A | 25 October 2022 | None | |
| US 2021063578 A1 | 04 March 2021 | WO 2021041854 A1 | 04 March 2021 |

Form PCT/ISA/210 (patent family annex) (July 2022)